# EUROPEAN PATENT SPECIFICATION

(11) **EP 4 302 485 B1**
(45) Date of publication and mention of the grant of the patent: **30.04.2025**
(21) Application number: 22708239.3
(22) Date of filing: 04.03.2022
(51) Int. Cl.: H04Q 9/04, G01D 21/02, H04J 3/06, H04W 56/00

(54) **METHOD FOR CENTRALLY SYNCHRONIZING THE EXECUTION OF INSTRUCTIONS BY PERIPHERAL DEVICES OF A WIRELESS NETWORK AND SYSTEM THAT IMPLEMENTS THE METHOD**
VERFAHREN ZUM ZENTRALEN SYNCHRONISIEREN DER AUSFÜHRUNG VON ANWEISUNGEN DURCH PERIPHERIEGERÄTE EINES DRAHTLOSEN NETZWERKS UND SYSTEM, DAS DAS VERFAHREN IMPLEMENTIERT
PROCEDE DE SYNCHRONISATION CENTRALISEE DE L'EXECUTION D'INSTRUCTIONS PAR DES DISPOSITIFS PERIPHERIQUES D'UN RESEAU SANS FIL ET SYSTEME METTANT EN OEUVRE LE PROCEDE

(30) Priority: 05.03.2021 IT 202100005234
(43) Date of publication of application: 10.01.2024
(73) Proprietor: Fondazione Istituto Italiano di Tecnologia, 16163 Genova (IT)
(72) Inventor: KALYANASUNDARAM BALASUBRAMANIAN, Karthikeyan, 16152 Genova (IT); MERELLO, Andrea, 16156 Genova (IT); ZINI, Giorgio, 16159 Genova (IT); CREPALDI, Marco, 16156 Genova (IT); BECCHIO, Cristina, 16152 Genova (IT); FOSTER, Nathan Charles, 16152 Genova (IT)
(74) Representative: Studio Torta S.p.A.
(86) International application number: PCT/IB2022/051941
(87) International publication number: WO 2022/185277

(56) References cited:
- EP-A1- 3 573 386
- EP-A1- 3 621 082
- US-A1- 2017 041 897

## Description

### CROSS-REFERENCE TO RELATED APPLICATIONS

This Patent Application claims priority from Italian Patent Application No. 102021000005234 filed on March 5, 2021.

### TECHNICAL FIELD

The present invention relates to a method for centrally synchronising the execution of instructions by peripheral devices of a wireless network and to a system that implements the method.

### BACKGROUND ART

As known, portable electronic devices such as smartphones, laptops and *smartwatches* may be connected to each other to form a wireless network, e.g. via well-known protocols such as Wi-Fi and Bluetooth.

For example, a wireless network may consist of a plurality of measuring devices and a central device, which typically has more advanced hardware resources, e.g. in terms of memory and computing power, than the measuring devices. Measuring devices comprise embedded sensors and actuators such as accelerometers, gyroscopes, etc., e.g. MEMS, which are configured to acquire electrical signals as a function of one or more physical quantities (e.g. accelerations) and send them to the central device.

In such wireless networks, the central device is configured to process the signals received from the measuring devices.

For example, the central device may be a *smartphone* and the measuring devices may be wearable devices such as *smartwatches,* which are placed in contact with different parts of a user's body.

Such measuring devices can detect physical quantities representative of the user's movement and send the acquired data over time to the central device, which can process it to determine a movement profile of the user, e.g. to monitor or identify different activities such as running, swimming etc.

The central device and the measuring devices each comprise a respective clock, e.g. a free-running clock, e.g. obtained from an electronic oscillator, or a derivative, such as a phase-lock loop, which regulates the operating frequency thereof.

It is known that the behaviour of a clock can vary over time due to changing operating conditions such as temperature. Moreover, the behaviour of a clock can change differently from one electronic device to another, e.g. depending on the type of clock used or on differences in construction.

Such variations in the behaviour of the clocks cause asynchronies to occur between the measuring devices and between the measuring devices and the central device.

As a result, data acquired by the measuring devices also have asynchronies that can cause errors during the subsequent relative processing by the central device.

Moreover, such variations may be difficult to identify and therefore difficult to prevent or compensate for, as they can be further affected, for example, by transmission delays due to the wireless connection channel and delays of hardware or software origin inside electronic devices.

Document EP 3 573 386 A1 discloses the synchronizing of data packets from embedded data sensors monitoring body motion of a patient, in particular data packets transmitted by a Bluetooth protocol. Data packets come with a timestamp.

A need is therefore perceived for a method for centrally synchronizing the execution of instructions by peripheral devices of a wireless network, which can compensate, in use, for such asynchronies.

### DISCLOSURE OF INVENTION

Aim of the present invention is to provide a synchronization method capable of fulfilling at least partially the above requirement.

According to the present invention, there are provided a method for synchronising the execution of instructions by peripheral devices of a wireless network and a system implementing the method as defined in the appended claims.

### BRIEF DESCRIPTION OF THE DRAWINGS

To better understand the present invention, a preferred embodiment thereof will be now described, for merely exemplary and non-limiting purposes, with reference to the appended drawings, wherein:
- Figure 1 shows a block diagram of the present measurement system;
- Figure 2 shows a flowchart of the present method of synchronising of the measurement system of Figure 1;
- Figure 3 schematically shows the flowchart of Figure 2;
- Figure 4 shows a sequence of instructions executed by the measurement system of Figure 1 in each cycle of the synchronization method of Figure 2;
- Figures 5 and 6 each show in detail the flowchart of a respective step of the method of Figure 2;
- Figure 7 shows a block diagram of a neural network of the measurement system of Figure 1, in use;
- Figure 8 shows the block diagram of the neural network of the measurement system of Figure 1, in use, in a training step;
- Figure 9 shows a flowchart of the training step of the neural network of Figure 8;
- Figure 10 schematically shows the flowchart of the training step of Figure 9; and
- Figure 11 shows a sequence of instructions executed by the measurement system of Figure 1 in one cycle of the training step of the neural network of Figure 7.

### BEST MODE FOR CARRYING OUT THE INVENTION

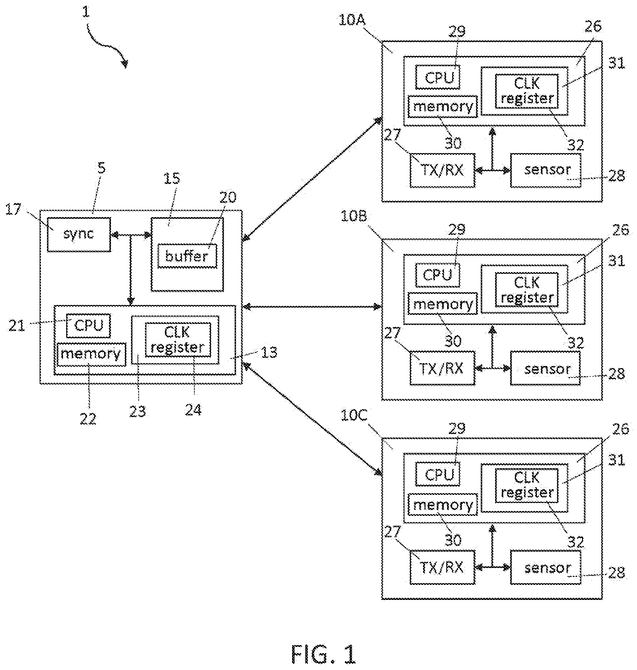

Figure 1 schematically shows a measurement system 1 comprising a main electronic device, hereinafter central device 5, e.g. a *smartphone* or laptop, and a plurality of electronic measuring devices, hereinafter measuring devices 10, e.g. wearable devices such as smart watches, augmented reality glasses, etc.

In this example, the plurality of measuring devices 10 includes a first, a second and a third measuring device 10A, 10B, 10C, which are equal to each other.

The measuring devices 10 are each configured to communicate with the central device 5 via a wireless connection channel, for example via a Bluetooth, Wi-Fi or other type of connection. In particular, the central device 5 is configured to send measurement instructions, such as start and end instructions of a data acquisition interval, to the measuring devices 10; the measuring devices 10 are configured to receive and execute such measurement instructions.

In addition, the measuring devices 10 are configured to send the data acquired during each data acquisition interval to the central device 5; the central device 5 is configured to receive such acquired data for further processing.

As described hereinafter in detail, the measurement system 1 is configured such that the central device 5 is able to determine a plurality of delays τᵢ (one for each measuring device 10), with which sending a plurality of measurement packets Pₖ, each one comprising a respective measurement instruction, to the measuring devices 10, so that the measurement instructions are executed substantially simultaneously by the measuring devices 10 and thereby compensating for any asynchronies between the measuring devices 10.

In detail, the central device 5 comprises a control unit 13, a transceiver module 15 and a synchronisation unit 17, operatively coupled to each other.

The transceiver module 15 is configured to exchange, i.e. send and receive, data packets with the measuring devices 10. In this embodiment, the transceiver module 15 additionally comprises a buffer 20.

The control unit 13 includes at least one processing unit 21, a memory 22 and a clock 23, which are coupled with each other (although this is not shown in Figure 1). The clock 23 is any type of electronic oscillator, derived from or based on quartz oscillators, such as a voltage-controlled oscillator, and determines the frequency of the operations performed by the central device 5. In this embodiment, the clock 23 comprises a respective clock register 24, wherein the current value of a counter associated with the operation of the clock 23 is stored, which is indicative of time elapsing in the time reference system of the central device 5.

The control unit 13 is configured to read packets received by the transceiver module 15 from the measuring devices 10, and to send data to the transceiver module 15 to be included in packets that are sent to the measuring devices 10.

The synchronisation unit 17 is configured to determine the aforementioned delays τᵢ, by which the transceiver module 15 sends the measurement packets Pₖ, comprising the measurement instructions, to the measuring devices 10, according to the method described in detail hereinafter.

The measuring devices 10 each comprise a respective control unit 26, a respective transceiver module 27 and a respective detection unit 28, operatively coupled to each other. As mentioned above, herein, the first, second and third measuring devices 10A, 10B, 10C are equal to each other; therefore, for simplicity, the control units 26, the transceiver modules 27 and the detection units 28 of the first, second and third measuring devices 10A, 10B, 10C are respectively denoted by the same reference numbers.

The transceiver module 27 of each measuring device 10 is configured to exchange, i.e. send and receive, data packets with the central device 5.

The detection unit 28 of each measuring device 10 comprises one or more sensors, for example an accelerometer and/or a gyroscope or other type of sensor, and is configured to detect one or more physical quantities associated with the use of the respective measuring device 10 and generate a corresponding electrical signal indicative of such measured quantities. In particular, each detection unit 28 is configured to acquire samples of the corresponding quantity over time.

The control unit 26 of each measuring device 10 includes at least one processing unit 29 and a memory 30 and also includes a respective clock 31, which determines the operating frequency of the respective measuring device 10. The clock 31 may be any type of electronic oscillator, derived from or based on quartz oscillators, e.g. a voltage-controlled oscillator, such as a free-running clock. In this embodiment, the clock 31 of each measuring device 10 comprises a respective clock register 32, where the current value of a counter associated with the operation of the clock 31 is stored, which is indicative of the time elapsing in the time reference system of the corresponding measuring device 10. Although not shown, the processing unit 29, the memory 30 and the clock 31 of each measuring device 10 are coupled with each other.

Without losing generality, in this embodiment the measuring devices 10 are configured to operate at an equal nominal operating frequency.

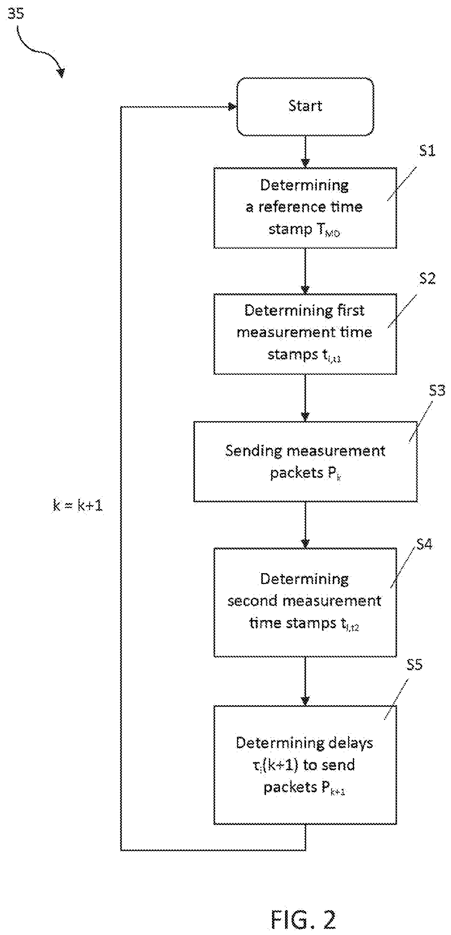

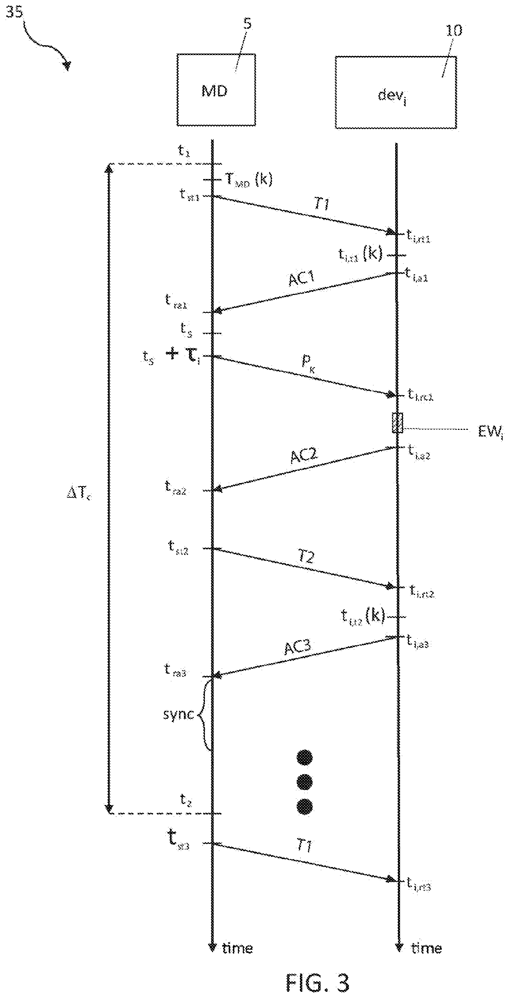

The measurement system 1 is configured to execute the synchronisation method denoted by number 35 and schematically shown by the flowchart in Figure 2 and the diagram in Figure 3. Hereinafter, the subscript "i" is used as an index to refer indistinctly, and without losing generality, to any one of the first, second and third measuring devices 10A, 10B, 10C.

In particular, for simplicity, Figure 3 refers only to a generic i-th measuring device 10.

The synchronization method 35 is formed by a plurality of measurement cycles, one of which is shown in Figures 2 and 3, which are equal to each other; hereinafter, these cycles are indexed by means of a k index. Referring, for example, to a generic k-th measurement cycle, a corresponding measurement instruction is associated with it, which is sent, by insertion in a corresponding measurement packet Pₖ, from the central device 5 to the measuring devices 10, and which is intended to be executed substantially simultaneously by the measuring devices 10. The measurement instruction may be, for example, an instruction for the detection unit 28 of each measuring device 10 to command, for example, a start or an end of a data acquisition interval, that is to command storing in the memory 30 of the samples acquired by the detection unit 28 in the data acquisition interval, in view of a later transmission of the stored samples to the central device 5. In other words, the measurement instruction may consist in an instruction which, when executed by the measuring device 10, causes the start or end of storage of the acquired samples.

Alternatively, and still by way of example, between the start and the end of the data acquisition interval, the measurement instruction may be an instruction that commands the positioning of a time mark in the memory 30 (and, therefore, among the samples acquired during the data acquisition interval) of the measuring devices 10, upon request by a user. Given a measuring device 10, such time mark marks the sample of the corresponding quantity acquired by the detection unit 28; such information may be used later, for example during a subsequent processing, by the central device 5, of the data acquired by the measuring devices 10.

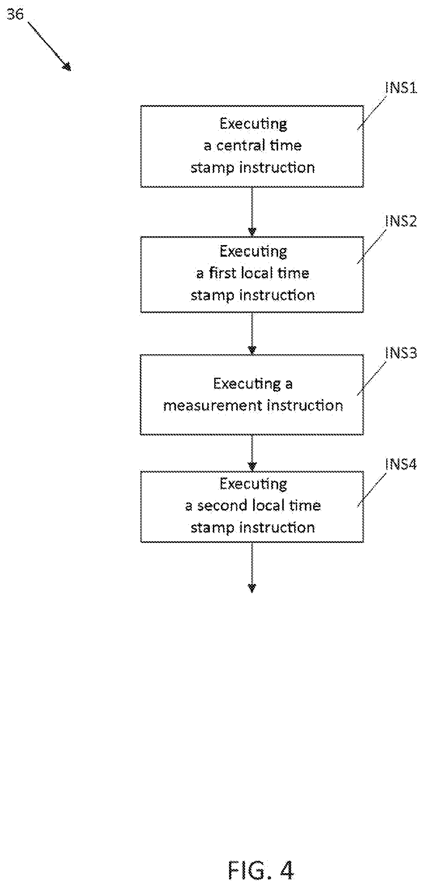

As shown in Figure 4, the k-th measurement cycle comprises the execution of a sequence of cycle instructions 36, as described in detail hereinafter. The sequence of cycle instructions 36 comprises executing: a central time stamp instruction (block INS1), a first local time stamp instruction (block INS2), a measurement instruction (block INS3) comprising one of the aforementioned measurement instructions, and a second local time stamp instruction (block INS4). The first local time stamp instruction, the instruction to be synchronized and the second local time stamp instruction are each associated with an instruction to send, to the measuring devices 10, a plurality of first time packets T1, a plurality of measurement packets Pₖ, and, respectively, a plurality of second time packets T2. For example, the first time packets T1, the second time packets T2 and the measurement packets Pₖ may be placed one after the other in the buffer 20, so that these packets are sent in sequence to each other when specific conditions occur.

The k-th measurement cycle of the synchronization method 35 is triggered by the reception, at instant t₁, by the central device 5, in particular by the control unit 13, of a measurement command from a user of the measurement system 1, i.e. when the user commands the execution of a measurement instruction. In particular, although not described in detail, the central device 5 can be commanded by the user so as to allow the latter to send the aforementioned measurement command to the control unit 13, and thus cause the execution of the corresponding measurement instruction.

A step S1 follows, wherein the central device 5 determines a reference time stamp T_{MD}(k), as described hereinafter. In detail, after receiving the measurement command, the control unit 13 executes the above-mentioned central time stamp instruction (block INS1 of Figure 4), which commands the reading, by the control unit 13 of the central device 5, of the current value in the respective clock register 24. The control unit 13 stores the reference time stamp T_{MD}(k) in the respective memory 22.

Next, at step S2, the central device 5, in particular the respective control unit 13, causes the determination of a plurality of first measurement time stamps t_{i,t1}, one for each measuring device 10, as described below.

In detail, the control unit 13 executes the aforementioned instruction to send a plurality of first time packets T1 and the central device 5 simultaneously sends, at the instant tₛₜ₁, a plurality of first time packets T1, one for each measuring device 10.

For example, the control unit 13 of the central device 5 may be configured to generate a first control signal after reading and storing of the reference time stamp T_{MD}(k). The first control signal commands the execution of the instruction to send a plurality of first time packets T1.

The first time packets T1 each include the first local time stamp instruction, which is the same for each first time packet T1. In other words, the first time packets T1 have the same payload, which comprises the first local time stamp instruction, and differ from each other in the address of the measuring device 10 to which each one is delivered.

The measuring devices 10 each receive their respective first time packet T1 at respective instants t_{i,rt1}.

For example, the first measuring device 10A receives the respective first time packet T1 at an instant t_{1,rt1}. The time difference between the instant tₛₜ₁ and the instant t_{1,rt1} depends on multiple factors, such as the physical distance between the central device 5 and the first measuring device 10A and the quality of the wireless connection channel.

Similar considerations apply to the second measuring device 10B and the third measuring device 10C.

The control unit 26 of each measuring device 10 is configured to process the respective first time packet T1 and execute the first local time stamp instruction (block INS2 in Figure 4). In detail, the first local time stamp instruction causes the control unit 26 of each measuring device 10 to determine the respective first measurement time stamp t_{i,t1}. The first measurement time stamp t_{i,t1} of a measuring device 10 corresponds to the current time, in the time reference system of the central device 10, at which the first local time stamp instruction is executed. For example, in this embodiment, the first local time stamp instruction commands the reading, by the control unit 26, of the current value in the respective clock register 32.

Thereafter, the first, second and third measuring devices 10A-10C each send to the central device 5, each at a respective instant t_{i,a1}, a respective first acknowledgement packet AC1, the payload of which comprises the respective first measurement time stamp t_{i,t1}.

After receiving the first acknowledgement packets AC1, the central device 5, in particular the respective control unit 13, stores the first measurement time stamps t_{i,t1} in the respective memory 22.

The instant tᵣₐ₁ in Figure 3 indicates the instant when the central device 5 has received the last of the first acknowledgement packets AC1.

Referring, for example, to the first measuring device 10A, the time difference between the instant t_{1,rt1} when the transceiver module 27 of the first measuring device 10A receives the respective first time packet T1 and the instant when the central device 5 receives the first acknowledgement packet AC1 from the first measuring device 10A depends on multiple factors, such as the quality of the connection channel, delays in executing instructions, having a software, hardware or different origin.

Similar considerations apply to the second measuring device 10B and the third measuring device 10C.

In addition, the aforesaid time difference may vary between the first, second and third measuring devices 10A-10C, e.g. due to different operating conditions, differences between the respective connection channels with the central device 5, etc.

Next, step S3, the central device 5 sends the plurality of measurement packets Pₖ, one for each measuring device 10. The measurement packets Pₖ, each include the measurement instruction, which is the same for each measuring device 10. In other words, the measurement packets Pₖ have the same payload, which comprises the measurement instruction, and differ from each other in the address of the measuring device 10 to which each one is delivered.

The measuring devices 10 each execute the measurement instruction (block INS3 of Figure 4), after receiving, at an instant t_{i,rc1}, the respective measurement packet Pₖ, in a respective execution window EWᵢ. The execution windows Ewiᵢ of each of the first, second and third measuring devices 10A, 10B, 10C may have variable durations, since they each depend on the respective clock 31.

The measurement packets Pₖ are sent after the central device 5 has received the first acknowledgement packets AC1 of each of the first, second and third measuring devices 10A-10C. For example, the control unit 13 of the central device 5 may be configured to generate a second control signal after receiving, at the instant tᵣₐ₁, all the first acknowledgement packets AC1. The second control signal commands the execution, at a send instant ts, of the instruction to send the measurement packets Pₖ.

In detail, the central device 5 is configured to send the measurement packets Pₖ each with a respective delay τᵢ(k) with respect to the send instant tₛ. The delays τᵢ(k) are stored in the central device 5, e.g. in the memory 22 of the respective control unit 13, and are determined by the central device 5, in particular the synchronization unit 17, in the k-1-th measurement cycle, as explained in detail below.

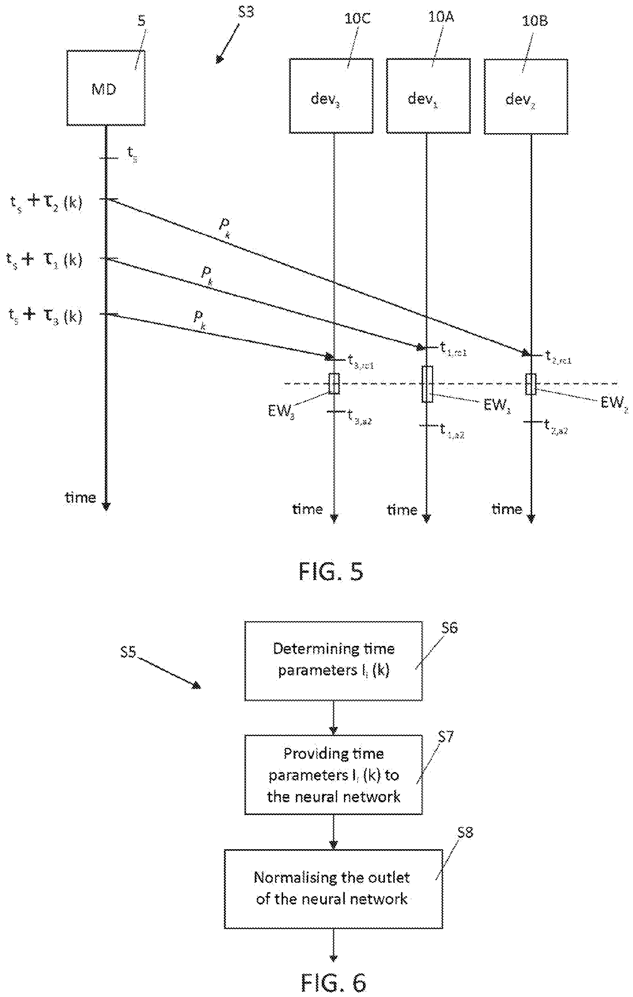

As shown in Figure 5, in the k-th measurement cycle, the central device 5 sends the respective measurement packet Pₖ to the first measuring device 10A with a first delay τ₁(k), to the second measurement device 10B with a second delay τ₂(k) and to the third measurement device 10C with a third delay τ₃(k), herein according to the relation τ₃ > τ₁ > τ₂. The first, second and third delays τ₁(k), τ₂(k), τ₃(k) cause the measurement instruction (such as the instruction causing the start or end of storing the acquired samples or the instruction commanding the positioning of a mark), to be executed substantially simultaneously by the first, second and third measuring devices 10A-10C.

In other words, the first, second and third delays τ₁(k), τ₂(k), τ₃(k) are such that the execution windows EW₁, EW₂, EW₃ of the first, second and third measuring devices 10A, 10B, 10C, respectively, are substantially aligned with each other in time.

After the measuring devices 10 have executed the measurement instruction, the measuring devices 10 each send a respective second acknowledgement packet AC2 to the central device 5 at a respective instant t_{i,a2}.

The instant tᵣₐ₂ in Figure 3 indicates the instant when the central device 5 has received the last of the second acknowledgement packets AC2 from the measuring devices 10.

A step S4 follows, wherein the central device 5, in particular the respective control unit 13, causes the determination of a plurality of second measurement time stamps t_{i,t2}, one for each measuring device 10.

In detail, the control unit 13 executes the instruction to send a plurality of second time packets T2 and the central device 5 simultaneously sends, at the instant tₛₜ₂, a plurality of second time packets T2, one for each measuring device 10.

For example, the control unit 13 of the central device 5 may be configured to generate a third control signal after the reception of all the second acknowledgement packets AC2. The third control signal commands the execution of the instruction to send a plurality of second time packets T2.

The second time packets T2 are the same as the first time packets T1 and each comprise the second local time stamp instruction, which is the same for each second time packet T2.

In other words, the second time packets T2 also have the same payload between each other, which comprises the second local time stamp instruction, and differ from each other in the address of the measuring device 10 to which each one is delivered.

The measuring devices 10 each receive their respective second time packet T2 at a respective instant t_{i,rt2}.

For example, the first measuring device 10A receives the respective second time packet T2 at an instant t_{1,rt2}. The time difference between the instant tₛₜ₂ and the instant t_{1,rt2} depends on several factors, such as the physical distance between the central device 5 and the first measuring device 10A and the quality of the wireless connection channel.

Similar considerations apply to the second measuring device 10B and the third measuring device 10C.

The control unit 26 of each measuring device 10 is configured to process the second time packet T2 and execute the second local time stamp instruction (block INS4 of Figure 4). In detail, the second local time stamp instruction causes the control unit 26 of each measuring device 10 to determine a respective second measurement time stamp t_{i,t2}. The second measurement time stamp t_{i,t2} of a measuring device 10 corresponds to the current time, in the time reference system of the respective measuring device 10, at which the second local time stamp instruction is executed. For example, in this embodiment, the second local time stamp instruction commands the reading, by the control unit 26, of the current value in the respective clock register 32.

Thereafter, the first, second and third measuring devices 10A-10C send to the central device 5, each at a respective instant t_{i,a3}, respective third acknowledgement packets AC3, the payloads of which comprise respective second measurement time stamps t_{i,t2}.

After reception of the third acknowledgement packets AC3, the central device 5, in particular the respective control unit 13, stores the second measurement time stamps t_{i,t2} in the respective memory 22.

The instant tᵣₐ₃ of Figure 3 indicates the instant when the central device 5 has received the last of the third acknowledgement packets AC3.

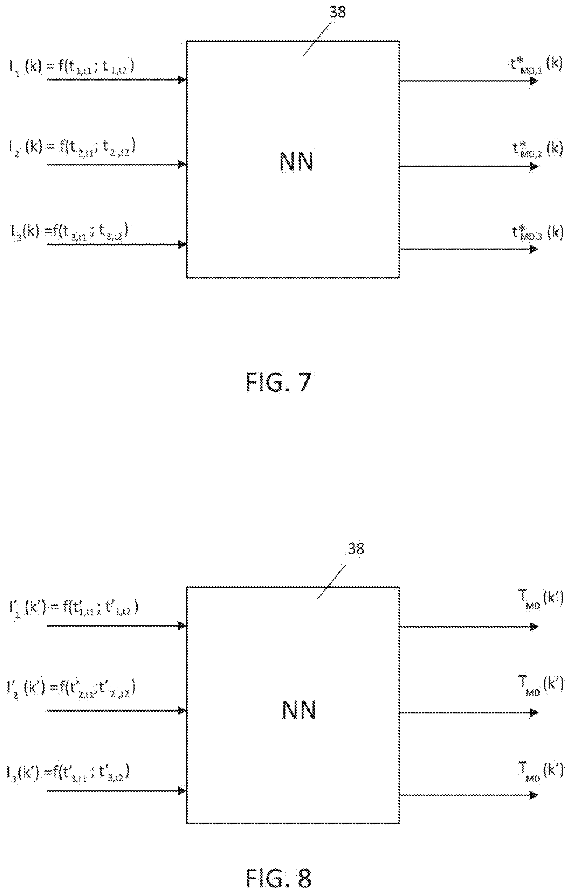

A step S5 follows, wherein the central device 5, and in particular the synchronization unit 17, determines, from the first measurement time stamps t_{i,t1} and the second measurement time stamps t_{i,t2} received in the k-th measurement cycle, a plurality of delays τᵢ(k+1) using a neural network 38, shown in Figure 7, as described in more detail hereinafter. The delays τᵢ(k+1) are used by the central device 5 in the following k+1-th measurement cycle to send the measurement packets Pₖ₊₁ to the measuring devices 10.

After a cycle interval ΔT_{c} has passed, which can be selected by a user depending on the specific application, i.e. depending on the desired time distance between two successive measurement instructions, the k+1-th measurement cycle is executed, as described above in relation to the k-th measurement cycle.

As shown in Figure 6, the step S5 of each k-th measurement cycle comprises a plurality of steps S6-S8. In step S6, the synchronization unit 17 is configured to determine a plurality of time parameters Iᵢ(k), one for each measuring device 10. In step S7, the synchronization unit 17 provides the time parameters Iᵢ(k) as input to the neural network 38, which processes the time parameters Iᵢ(k), as discussed hereinafter.

The time parameter Iᵢ(k) of each measuring device 10 is a function of the respective first measurement time stamp t_{i,t1} and the respective second measurement time stamp t_{i,t2}, determined in the k-th measurement cycle. For example, the time parameters Iᵢ(k) may each be given by the sum of the respective first measurement time stamp t_{i,t1} and the respective second measurement time stamp t_{i,t2}, or by their difference, their arithmetic average, weighted or non-weighted, or any other linear or non-linear combination of the first measurement time stamp t_{i,t1} and the second measurement time stamp t_{i,t2}.

In particular, in the present example, the time parameters Iᵢ(k) are each calculated as the arithmetic average of the respective first measurement time stamp t_{i,t1} and the respective second measurement time stamp t_{i,t2}; thus, the formula Iᵢ(k) = (t_{i,t1}(k) + t_{i,t2}(k))/2 applies.

The neural network 38 is of the known type and may be, for example, a convolutional, recursive, deep, or reinforcement learning neural network.

The neural network 38 has a plurality of inputs and a plurality of outputs (in the present example, three inputs and three outputs), and in particular has one input and one output for each measuring device 10. In a way that is known in itself, the inputs of the neural network 38 are connected to the outputs of the neural network 38 through a number of hidden layers, not herein shown, which may be chosen according to the specific application, using a plurality of weights W, which are defined during a training step, described hereinafter, and stored in the memory 22 of the central device 5.

In detail, the neural network 38 has been previously trained to output a plurality of estimated time values t*_{MD,i}, one for each output, representative of a corresponding time instant in the reference time system of the central device 5. In particular, the neural network 38 is trained so that the estimated time values t*_{MD,i} are each an estimation of the reference time stamp T_{MD}(k) determined in the k-th measurement cycle; i.e., in this embodiment, of the time instant at which the control unit 13 has executed the aforementioned determination instruction of reference time stamp T_{MD}(k). More in detail, the neural network 38 has been trained (as described hereinafter) so as to model the time relationship existing between the reference time stamp T_{MD}(k) and the time parameters Iᵢ(k), and thus between the execution of the central time stamp instruction INS1 and the execution, by the measuring devices 10, of the first and second local time stamps INS2, INS4 contained in the respective first and second time packets T1, T2. Furthermore, since in each measuring device 10 the execution of the measurement instruction INS3 contained in the respective measurement packet Pₖ is temporally comprised between the respective first and second measurement time stamps t_{i,t1},t_{i,t2}, the neural network 38 also models the time relationship existing between the execution of the central time stamp instruction by the central device 5 and the execution, by the measuring devices 10, of the measurement instruction contained in the respective measurement packets Pₖ.

In practice, each estimated time value t*_{MD,i} represents an estimation (associated with the corresponding i-th measuring device 10) of the time instant at which the control unit 13 of the central device 5 should have executed the central time stamp instruction, such that the execution, by the measuring devices 10, of the first and second local time stamp instructions contained in the respective first and second time packets T1, T2 (and thus, also the executions of the measurement instructions contained in the measuring packets Pₖ) were temporally aligned with each other.

Consequently, the estimated time values t*_{MD,i} are all equal to the reference time stamp T_{MD}(k) only in the ideal case wherein the delays τᵢ(k) have exactly compensated for the asynchrony factors currently present between the measuring devices 10 (different distances, different timings, different instruction execution speeds, etc.).

By contrast, an estimated time value t*_{MD,i}(k) different from the reference time stamp T_{MD}(k) is indicative of the fact that, between the k-1-th measurement cycle, wherein the delays τᵢ(k) were determined, and the k-th measurement cycle, wherein the delays τi(k) are used to send the measurement packets Pₖ, a time variation has occurred concerning a respective measuring device 10, which was therefore not provided by the neural network 38 in the k-1-t measurement cycle.

For example, said time variation may be caused by a change in the wireless connection channel between the central device 5 and the respective measuring device 10, or by software-derived delays in the respective measuring device 10, or by a change in behaviour, for example due to an offset or drift, of the respective clock 31.

In step S8, the estimated time values t*_{MD,i} are processed by the central device 5, in particular by the control unit 13. For exemplary purposes, taking the first estimated time value t*_{MD,1} as an example, the control unit 13 calculates the difference between the first estimated time value t*_{MD,1}(k) and the reference time stamp T_{MD}(k).

Similarly, for the second measuring device 10B, the control unit 13 calculates the difference between the second estimated time value t*_{MD,2}(k) and the reference time stamp T_{MD}(k) and, for the third measuring device 10C, the control unit 13 calculates the difference between the third estimated time value t*_{MD,3}(k) and the reference time stamp T_{MD}(k).

Said differences are then normalised with respect to the difference with the lowest value.

For example, let us assume, for the measurement cycle k = 4, that the reference time stamp T_{MD}(k) is 8 s and that the neural network 38 has estimated, as output, the following time values t*_{MD,1} = 8,05 s, t*_{MD,2} = 8,03 s, and t*_{MD,3} = 8,07 s.

Consequently, the aforesaid differences have a value of 0.05 s for the first measuring device 10A, 0.03 s for the second measuring device 10B, and 0.07 s for the third measuring device 10C.

The plurality of delays τᵢ(k+1) is then obtained by normalising these differences with respect to the difference value of the second measuring device 10B. Thus, the plurality of delays τᵢ(k+1) is determined as follows: τ₁ = (0.05 - 0.03) s = 0.02 s; τ₂ = (0.03 - 0.03) s = 0 s; and τ₃ = (0.07 - 0.03) s = 0.04 s.

In the k+1-th measurement cycle, i.e., for k = 5, the measurement packets P₅ are then sent, by the central device 5, each with a delay of 0.02 s to the first measuring device 10A, with a delay of 0 s to the second measuring device 10B, and with a delay of 0.04 s to the third measuring device 10C, with respect to the send instant tₛ at which instruction to send measurement packets Pₖ is executed. In other words, in this embodiment, the normalisation executed in step S8 causes the measurement packet P₅ to be sent to the second measuring device 10B with a zero delay τ₂(5) with respect to the send instant ts.

A training method 40 of the neural network 38, which may be executed prior to a first use of the measurement system 1, is hereinafter described, with reference to Figures 8-11.

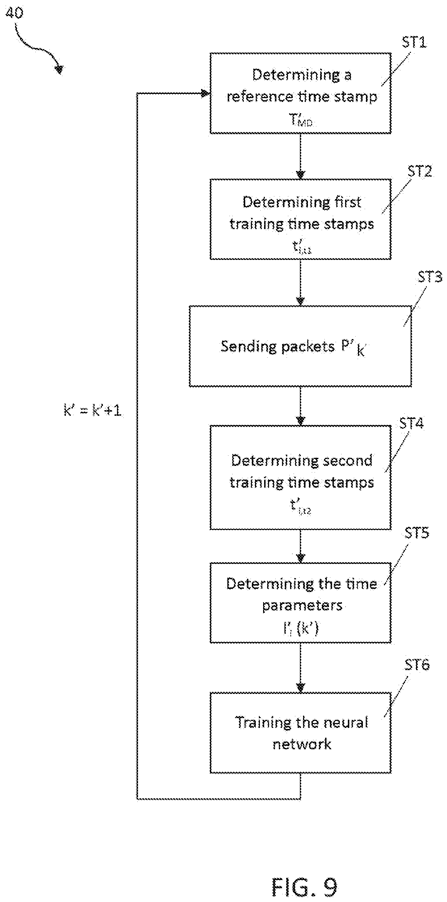

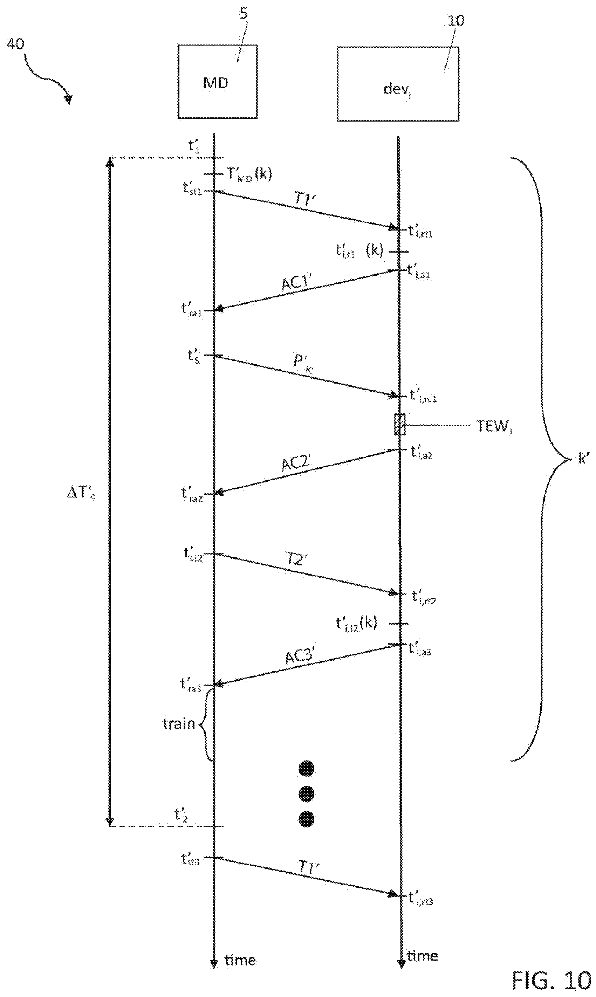

The training method 40, as shown in Figures 9 and 10, is formed by a plurality of training cycles (indexed with an index k'), executed recursively one after the other. The training cycles comprise the same steps, except for the differences described hereinafter, as the measurement cycles described with reference to Figures 2 and 3. Consequently, for the sake of clarity, the time instants and the packets shown in Figure 10 are indicated with an apex with respect to the corresponding time instants and packets shown in Figure 3.

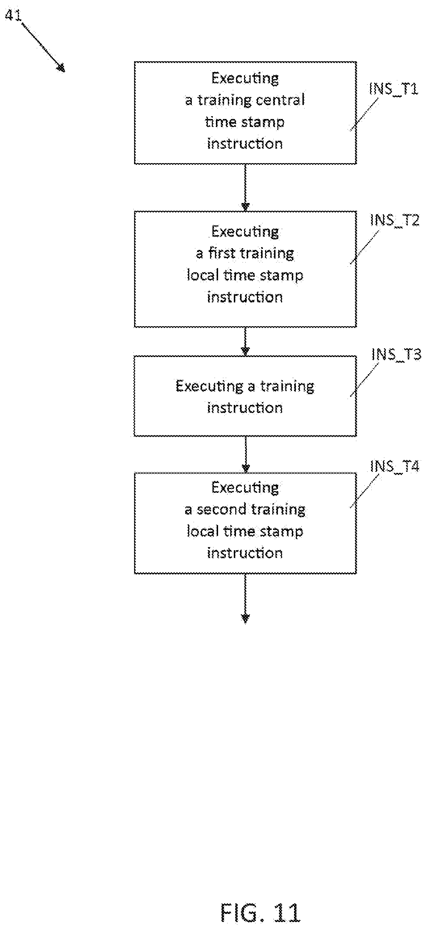

As shown in Figure 11, the k'-th training cycle comprises the execution of a sequence of training instructions 41, which is the same as the sequence of cycle instructions 36, except for the differences described hereinafter. The sequence of training instructions 41 comprises executing: a central training time stamp instruction (block INS_T1), a first training local time stamp instruction (block INS_T2), a training instruction (block INS_T3), and a second training local time stamp instruction (block INS_T4). The first training local time stamp instruction, the training instruction, and the second training local time stamp instruction are each associated with an instruction to send, to the measuring devices 10, a plurality of first training time packets T1', a plurality of training packets P'ₖ, and, respectively, a plurality of second training time packets T2', as described with reference to the synchronization method 35.

Again with reference to Figure 9, the k'-th training cycle comprises a first step ST1, wherein the control unit 13 of the central device 5 executes the central training time stamp instruction (block INS_T1 of Figure 11) and a training reference time stamp T'_{MD}(k') is then determined, in the same manner as described with reference to the reference time stamp T_{MD}(k) (step S1 of the synchronisation method 35).

A second training step ST2 follows, wherein the measuring devices 10 each execute a respective first training local time stamp instruction (block INS_T2 of Figure 11) and a plurality of first training time stamps t'_{i,t1} is then determined in the same way as described with reference to the first measurement time stamps t_{i,t1} (step S2 of the synchronization method 35).

Subsequently, in a third training step ST3, the central device 5 sends the plurality of training packets P'_{k'}, one for each measuring device 10, after reception, at the instant t'ᵣₐ₁, of the first acknowledgement packets AC1 by all the measuring devices 10, in the same way as described with reference to the measurement packets Pₖ (step S3 of the synchronization method 35). The training packets P'_{k'} each contain the training instruction, which is a functionally equivalent instruction with respect to a measurement instruction discussed with reference to the third step S3 of the synchronization method 35. In detail, said functionally equivalent instruction may be a measurement instruction or an instruction such that the measuring devices 10 execute a number of machine cycles equal to those used for executing one of the aforementioned measurement instructions. In other words, the measuring devices 10 each execute said functionally equivalent instruction (block INST_T3 of figure 11) in a respective training execution window TEWᵢ, the duration of which approximates the duration of the execution windows EWᵢ.

In the third training step ST3, the training packets P'_{k'} are sent simultaneously to the measuring devices 10.

Subsequently, in a fourth training step ST4, the measuring devices 10 each execute a respective second training local time stamp instruction (block INS_T4 of Figure 11) and a plurality of second training time stamps t'_{i,t2} is then determined in the same way as described with reference to the second measuring time stamps t_{i,t2} (step S4 of the synchronization method 35).

In a fifth training step ST5, the synchronization unit 17 determines, from the first training time stamps t'_{i,t1} and the second training time stamps t'_{i,t2}, a plurality of training time parameters I'ᵢ(k'), one for each measuring device 10. The training time parameters I'ᵢ(k') are calculated in the same way as the time parameters Iᵢ(k), as described above.

The neural network 38 is subsequently trained, step ST6, using a known training algorithm, e.g., an algorithm of backpropagation, Stochastic Gradient Descent (SGD), Root Mean Square Propagation (RMSProp), Adaptive Gradient (AdaGrad), Adaptive moment estimation (Adam), Adaptive Learning Rate (AdaDelta), Adaptive Max (AdaMax), Nesterov-accelerated Adaptive Moment Estimation (Nadam), or Follow the Regularized Leader (FTRL).

In particular, the training method 40 is of a supervised type and the training algorithm is provided, at input, with both the training time parameters I'ᵢ(k'), which are used as inputs of the neural network 38, and the value of the training reference time stamp T'_{MD}(k), which is set on all outputs of the neural network 38. In addition, the training algorithm also receives as input a plurality of temporary weights W_{k'-1}, which are calculated by the training algorithm in the k'-1-th training cycle and stored in the memory 22.

As known, and as described above, temporary weights connect the inputs and outputs of the neural network 38 through the plurality of hidden layers.

At the first iteration of the training method 40, i.e. for k' = 1, the temporary weights W₁ may take on a default value, e.g. selected by a user.

Again with reference to the generic k'-th training cycle, the training algorithm generates as output a plurality of corresponding temporary weights W_{k'} of the neural network 38, which are stored in the memory 22 of the central device 5.

After a training cycle interval ΔT'_{c}, which may be selected by a user according to the specific application, has passed, the next k'+1-th training cycle is executed, wherein what has been described for the steps ST1-ST6 of the k'-th training cycle is executed again. The execution of the k'+1-th training cycle enables to determine a new plurality of corresponding temporary weights W_{k'+1}, which are then stored in the memory 22 of the central device 5, replacing the temporary weights W_{k'} calculated in the previous k'-th training cycle. The training algorithm is such that the estimation error of the output values of the neural network 38 that is obtained using the temporary weights W_{k'+1} determined in the k'+1-th training cycle is smaller than the estimation error of the output values of the neural network 38 that is obtained using the temporary weights W_{k'} determined in the previous k'-th training cycle.

The training cycle interval ΔT'_{c} and the number of training cycles may vary depending on the specific application. For example, the training cycle interval ΔT'_{c} may be between 5 s and 20 s, or even longer. For example, the number of training cycles may be between 100 and 500.

Considering the case wherein the training method 40 comprises a number N of training cycles, the temporary weights W_{N} determined by the training algorithm in the N-th training cycle and stored in the memory 22 in place of the temporary weights W_{N-1} in the N-1-th training cycle, constitute the weights W used by the synchronization method 35.

In order to obtain a plurality of reliable weights W, the training method 40 may be executed under different operating conditions of the measurement system 1. For example, a first number of training cycles may be executed by varying the operating temperature of the measuring devices 10 and the central device 5. In addition, a second number of training cycles may be executed by varying the distance and quality of the wireless connection channel between the central device 5 and the measuring devices 10. In addition or alternatively, further training cycles may be executed by varying the level of a battery of the peripheral devices 10, in the presence of additional devices having devices for connecting to a wireless network, while the central device 5 parallelly executes other functions or while the central device 5 is also connected to other peripheral devices.

In other words, the neural network 38 makes it possible to implement a non-linear function that approximates, at each measurement cycle, the current time relation existing between the time reference system of the central device 5 and the time reference systems of the measuring devices 10. As discussed above, a discrepancy between the estimated value of the reference time stamp t*_{MD,i}(k) and the actual value of the reference time stamp T_{MD}(k) measured at the beginning of the respective k-th measurement cycle, is indicative of a time variation concerning the measuring devices 10 with respect to the k-1-th measurement cycle, due for example to a change in the wireless connection channel or inside the measuring devices, for example an offset or drift of the respective clock 31.

In detail, the fact that the training time parameters I'ᵢ(k') used to train the neural network 38 are a function of both the first training time stamp t'_{i,t1}(k') and the second training time stamp t'_{i,t2}(k') results in the training time parameters I'ᵢ(k') being affected by the factors causing the asynchronies between the previously mentioned measuring devices 10. Indeed, a function of the first training time stamp t'_{i,t1}(k') and the second training time stamp t'_{i,t2}(k') is also a function of the time taken for the propagation, reception and processing of the first and second time packets T1', T2' and the training packet P'_{k'}, and thus a function of the variations in operation of the respective clocks 31 and of the wireless connection channel.

It therefore emerges that the synchronisation unit 17 of the central device 5 is able, in use, to use the synchronization method 35, to estimate the time differences that are established in the measurement system 1, and to correct them, using the delays τᵢ, so that the measuring devices 10 execute the measurement instructions substantially simultaneously; that is, that the respective execution windows EWᵢ are aligned with each other.

Accordingly, in use, the data acquired by the detection units 28 of the measuring devices 10 between the execution of two successive measurement instructions, for example between the start and end of detection instructions or between two successive time stamp positioning instructions, are synchronized with each other.

This is particularly useful in applications wherein a high operating frequency of the measuring devices 10 is required in data acquisition, e.g. greater than 50 Hz, in particular up to 200 Hz, or even greater than 200 Hz, and wherein, therefore, even low levels of asynchrony in the execution of the measurement instructions, e.g. less than 1 ms, may cause a significant time mismatch in the acquired data, which would compromise proper subsequent processing thereof by the central device 5.

It also emerges that the present synchronization method 35 is highly versatile in adapting to measurement systems comprising different types of measuring devices, e.g. having different technical specifications. In addition, the operations required by the synchronization method 35 to the measuring devices 10 require low computational resources.

Finally, it is clear that modifications and variations may be made to the measurement system 1, the synchronization method 35 and the training method 40 herein described and shown without thereby departing from the protective scope of the present invention, as defined in the appended claims.

For example, the measurement system 1 may comprise a different number of measuring devices 10 and/or the measuring devices 10 may be different from each other. For example, the measuring devices 10 may be configured, by construction, to operate at a different nominal native frequency from each other. However, specific circuits and/or algorithms, e.g. through downsampling of measuring devices 10 having higher nominal native frequencies, may be used to cause all measuring devices 10 to operate at the same nominal operating frequency, being the lowest nominal native frequency or fractions thereof.

For example, the instructions to be synchronised may be instructions different from the above-mentioned measurement instructions.

For example, the synchronization unit 17 may be incorporated into the control unit 13 and the neural network 38 may be implemented in a dedicated processing unit.

Furthermore, the synchronization method 35 may be configured so as to use fewer measuring devices than the number of measuring devices 10 forming the measurement system 1.

For example, the neural network 38 may be trained using, as supervised output values, a reference time stamp that differs from what above described. For example, the training reference time stamp (and consequently also the reference time stamp of the present synchronization method) may be determined as a response to the reception of the third acknowledgement packets AC3, i.e., the training central time stamp instruction may be executed (block INS_T1 of Figure 11) at the time instant t'ᵣₐ₃. Or, the training reference time stamp (and consequently also the reference time stamp of the present synchronization method) may be calculated as a linear or non-linear combination of a first reference time stamp, determined at the beginning of the k'-th training cycle as described for step ST1 of the training method 40, and a second reference time stamp, determined at the end of the k'-th training cycle, e.g. after reception of the third acknowledgement packets AC3, i.e. at the time instant t'ᵣₐ₃. In other words, the training central time stamp instruction (and therefore also the central time stamp instruction) may comprise executing a first instruction, to determine the first reference time stamp, and a second instruction, to determine the second reference time stamp.

For example, time parameters Iᵢ(k) may be determined by the measuring devices 10. In particular, each measuring device 10 may temporarily store in the respective memory 30, for the k-th measurement cycle, the respective first measurement time stamp t_{i,t1}(k) and the respective second measurement time stamp t_{i,t2} (k), determine the respective time parameter Iᵢ(k) and send the respective time parameter Iᵢ(k) to the central device 5 by introducing it in the payload of the respective third acknowledgement packet AC3.

For example, the central device 5 may operate according to any operating system.

## Claims

1. A method for centrally synchronizing the execution of instructions by a plurality of peripheral devices (10) of a wireless network including a central device (5), said peripheral devices (10) and said central device (5) each comprising a respective clock (31, 23), said method comprising executing a sequence of cycles of operations, each cycle of operations comprising:
- by the central device (5), executing a number of reference instructions (INS1), determining time instants (T_{MD}(k)) relative to the executions of said reference instructions and referred to the clock of the central device (5), determining a reference time stamp (T_{MD}(k)) as a function of the determined time instants (T_{MD}(k)), and causing the execution, by each peripheral device (10), of a first and a second local instruction (INS2, INS4);
- determining, by each peripheral device (10), a corresponding first peripheral time stamp (t_{i,t1}(k)) and a corresponding second peripheral time stamp (t_{i,t2}(k)), which are relative to the execution, by the peripheral device (10), of the first and the second local instructions, respectively, and are referred to the clock (31) of the peripheral device (10);
- by the central device (5), causing the execution, by each peripheral device (10), of an instruction to be synchronized (INS3), said step of causing the execution of an instruction to be synchronized comprising sending to each peripheral device (10), by the central device (5), a respective instruction packet (Pₖ) including the instruction to be synchronized, the instruction packets each being sent with a respective send delay (τᵢ(k)) with respect to a send reference instant (tₛ), so that the execution, by each peripheral device (10), of the instruction to be synchronized is delayed as a function of the respective send delay, said send delays being relative to the previous cycle of operations;
- for each peripheral device (10), determining, alternatively by the central device (5) or the peripheral device (10), a corresponding time parameter (Iᵢ(k)), which is a function of the corresponding first and second peripheral time stamps (t_{i,t1}(k), t_{i,t2} (k));
each cycle of operations further comprising, by the central device (5):
- executing, starting from the determined time parameters (Iᵢ(k)), a machine-learning algorithm trained to determine, for each peripheral device (10), a corresponding estimation (t*_{MD,i}(k)) of the reference time stamp (T_{MD}(k)); and
- calculating said send delays (τᵢ(k+1)) relative to the cycle of operations as a function of the estimations (t*_{MD,i}(k)) determined by the machine-learning algorithm and the reference time stamp (T_{MD}(k)).

2. The method according to claim 1, wherein said step of causing the execution, by each peripheral device (10), of a first and a second local instruction (INS2, INS4) comprises:
- sending to each peripheral device (10), by the central device (5), a respective first time packet (T1) including the first local instruction; and
- sending to each peripheral device (10), by the central device (5), a respective second time packet (T2) including the second local instruction;
and wherein the step of determining, by each peripheral device (10), a corresponding first peripheral time stamp (t_{i,t1}(k)) is executed in response to the reception, by the peripheral device (10), of the respective first time packet (T1); and wherein the step of determining, by each peripheral device (10), a corresponding second peripheral time stamp (t_{i,t2}(k)) is executed in response to the reception, by the peripheral device (10), of the respective second time packet (T2); and wherein the step of sending to each peripheral device (10), by the central device (5), a respective instruction packet (Pₖ) is executed after said step of sending to each peripheral device (10) a respective first time packet (T1) and before said step of sending to each peripheral device (10) a respective second time packet (T2).

3. The method according to claim 2, further comprising, by each peripheral device (10), executing the steps of:
- after determining the respective first peripheral time stamp (t_{i,t1}(k)), sending to the central device (5) a corresponding initial acknowledgement packet (AC1) including the first peripheral time stamp (t_{i,t1}(k));
- after determining the respective second peripheral time stamp (t_{i,t2}(k)), sending to the central device (5) a corresponding final acknowledgement packet (AC3) including the second peripheral time stamp (t_{i,t2}(k)) ;
and wherein the step of sending to each peripheral device (10), by the central device (5), a respective instruction packet (Pₖ) is executed after the central device (5) has received all the initial acknowledgement packets (AC1).

4. The method according to claim 3, further comprising the step of sending, by each peripheral device (10), a corresponding intermediate acknowledgement packet (AC2) to the central device (5), after reception of the respective instruction packet (Pₖ); and wherein the step of sending, by the central device (5), a respective second time packet (T2) to each peripheral device (10) is executed after the central device (5) has received all the intermediate acknowledgement packets (AC2).

5. The method according to any one of the preceding claims, wherein the machine-learning algorithm (38) is trained by executing a sequence of training cycles, each training cycle comprising:
- by the central device (5), executing a number of training reference instructions (INS_T1), determining training time instants (T'_{MD}(k')) relative to the executions of said training reference instructions and referred to the clock of the central device (5), and determining a training reference time stamp (T'_{MD}(k')) as a function of the determined training time instants (T'_{MD}(k'));
- sending, by the central device (5), to each peripheral device (10) a respective first time packet (T1') including a first training local instruction (INS_T2);
- by each peripheral device (10), executing the first training local instruction and determining a corresponding first training peripheral time stamp (t'_{i,t1}(k')), which is relative to the execution of the first training local instruction by the peripheral device (10) and is referred to the clock (31) of the peripheral device (10), and sending to the central device (5) a corresponding initial acknowledgement packet (AC1') including the first training peripheral time stamp (t'_{i,t1}(k'));
- sending, by the central device (5), to each peripheral device (10) a respective training packet (P'_{k'}) including a training instruction, the training packets (P'_{k'}) being sent simultaneously;
- executing, by each peripheral device (10), the training instruction (INS_T3), after the reception of the respective training packet (P'_{k'});
- sending, by the central device (5), to each peripheral device (10) a respective second time packet (T2') including the second training local instruction;
- by each peripheral device (10), executing the second training local instruction (INS_T4) and determining a corresponding second training peripheral time stamp (t'_{i,t2}(k')), which is relative to the execution of the second training local instruction by the peripheral device (10) and is referred to the clock (31) of the peripheral device (10), and sending to the central device (5) a corresponding final acknowledgement packet (AC3') including the second training peripheral time stamp (t'_{i,t2}(k'));
- by the central device (5), determining for each peripheral device (10), a corresponding training time parameter (I'ᵢ(k')), which is a function of the corresponding first and second training time stamps (t'_{i,t1}(k'), t'_{i,t2}(k')), and training the machine-learning algorithm (38) in a supervised manner, based on the training time parameters (I'ᵢ(k')) and the training reference time stamp (T'_{MD}(k')).

6. The method according to claim 5, wherein the machine-learning algorithm (38) comprises a plurality of weights; and wherein each training cycle comprises acquiring initial values of the weights relative to the training cycle; and wherein said step of training the machine-learning algorithm (38) comprises updating the values of the weights as a function of the training time parameters (I'ᵢ(k')) and the training reference time stamp (T'_{MD}(k')); and wherein the initial values of the weights relative to the training cycle are equal to the updated values of the weights relative to the previous training cycle.

7. The method according to any one of the preceding claims, wherein said machine-learning algorithm (38) is a neural network (38).

8. The method according to any one of the preceding claims, wherein each peripheral device (10) comprises a respective detection unit (28) configured to detect a physical quantity associated with the use of the peripheral device (10) by a user and configured to execute a plurality of remotely controlled operations, said instruction to be synchronized commanding, when executed by the peripheral device (10), the execution of one of said remotely controlled operations.

9. A central electronic device (5) configured to wirelessly couple to a plurality of peripheral electronic devices (10) each comprising a respective clock (31), the central electronic device comprising a respective clock (23) and being configured to execute a plurality of cycles of operations, each cycle of operations comprising:
- executing a number of reference instructions (INS1), determining time instants (T_{MD}(k)) relative to the executions of said reference instructions and referred to the respective clock (23), determining a reference time stamp (T_{MD}(k)) as a function of the determined time instants (T_{MD}(k)) and causing the execution, by each peripheral electronic device (10), of a first and a second local instruction (INS2, INS4);
- receiving, by each peripheral electronic device (10), a corresponding first peripheral time stamp (t_{i,t1}(k)) and a corresponding second peripheral time stamp (t_{i,t2}(k)), which are relative to the execution of the first and the second local instructions, respectively, by the peripheral electronic device (10) and are referred to the clock (31) of the peripheral electronic device (10);
- causing the execution, by each peripheral electronic device (10), of an instruction to be synchronized (INS3), said step of causing the execution of an instruction to be synchronized comprising sending to each peripheral electronic device (10) a respective instruction packet (Pₖ) including the instruction to be synchronized, the instruction packets each being sent with a respective send delay (τᵢ(k)) with respect to a send reference instant (tₛ), such that the execution, by each peripheral electronic device (10), of the instruction to be synchronized is delayed as a function of the respective send delay, said send delays being relative to the previous cycle of operations;
- determining for each peripheral electronic device (10), or alternatively receiving from each peripheral electronic device (10), a corresponding time parameter (Iᵢ(k)), which is a function of the corresponding first and second peripheral time stamps (t_{i,t1}(k), t_{i,t2} (k));
- executing, starting from the determined time parameters (Iᵢ(k)), a machine-learning algorithm trained to determine, for each peripheral electronic device (10), a corresponding estimation (t*_{MD,i}(k)) of the reference time stamp (T_{MD}(k)); and
- calculating said send delays (τᵢ(k+1)) relative to the cycle of operations as a function of the estimations (t*_{MD,i}(k)) determined by the machine-learning algorithm and the reference time stamp (T_{MD}(k)).

10. The central electronic device (5) according to the preceding claim, which is furthermore configured to:
- send, to each peripheral electronic device (10), a respective first time packet (T1) including the first local instruction; and
- send, to each peripheral electronic device (10), a respective second time packet (T2) including the second local instruction;
the central electronic device (5) being further configured to send to each peripheral electronic device (10) the respective instruction packet (Pₖ) after having sent, to each peripheral device (10), the respective first time packet (T1) and before sending to each peripheral device (10) the respective second time packet (T2).

11. A system comprising a central electronic device (5) according to claim 10 and said plurality of peripheral electronic devices (10),
wherein each peripheral electronic device (10) is configured to determine the respective first peripheral time stamp (t_{i,t1}(k)) and the respective second peripheral time stamp (t_{i,t2}(k)) in response to the reception of the respective first time packet (T1) and the respective second time packet (T2), respectively; and wherein each peripheral electronic device (10) is furthermore configured to send to the central electronic device (5), after the determination of the respective first peripheral time stamp (t_{i,t1}(k)), a corresponding initial acknowledgement packet (AC1) including the respective first peripheral time stamp (t_{i,t1}(k)); and wherein each peripheral electronic device (10) is furthermore configured to send to the central electronic device (5), after the determination of the respective second peripheral time stamp (t_{i,t2}(k)), a corresponding final acknowledgement packet (AC3) including the respective second peripheral time stamp (t_{i,t2}(k)).

12. A computer program comprising instructions so that, when executed by a central electronic device (5) including a respective clock (23) and wirelessly couplable to a plurality of peripheral devices (10) including respective clocks (31), they cause the central electronic device to execute a plurality of cycles of operations, each cycle of operations comprising:
- executing a number of reference instructions (INS1), determining time instants (T_{MD}(k)) relative to the executions of said reference instructions and referred to the respective clock (23), determining a reference time stamp (T_{MD}(k)) as a function of the determined time instants (T_{MD}(k)) and causing the execution, by each peripheral electronic device (10), of a first and a second local instruction (INS2, INS4);
- receiving, by each peripheral electronic device (10), a corresponding first peripheral time stamp (t_{i,t1}(k)) and a corresponding second peripheral time stamp (t_{i,t2}(k)), which are relative to the execution of the first and the second local instructions, respectively, by the peripheral electronic device (10) and are referred to the clock (31) of the peripheral electronic device (10);
- causing the execution, by each peripheral electronic device (10), of an instruction to be synchronized (INS3), said step of causing the execution of an instruction to be synchronized comprising sending to each peripheral electronic device (10) a respective instruction packet (Pₖ) including the instruction to be synchronized, the instruction packets each being sent with a respective send delay (τᵢ(k)) with respect to a send reference instant (tₛ), such that the execution, by each peripheral electronic device (10), of the instruction to be synchronized is delayed as a function of the respective send delay, said send delays being relative to the previous cycle of operations;
- determining, for each peripheral electronic device (10), or alternatively receiving from each peripheral electronic device (10), a corresponding time parameter (Iᵢ(k)), which is a function of the corresponding first and second peripheral time stamps (t_{i,t1}(k), t_{i,t2} (k)) ;
- executing, starting from the determined time parameters (Iᵢ(k)), a machine-learning algorithm trained to determine, for each peripheral electronic device (10), a corresponding estimation (t*_{MD,i}(k)) of the reference time stamp (T_{MD}(k)); and
- calculating said send delays (τᵢ(k+1)) relative to the cycle of operations as a function of the estimations (t*_{MD,i}(k)) determined by the machine-learning algorithm and the reference time stamp (T_{MD}(k)).

13. A computer medium that stores the computer program according to claim 12.

## Patentansprüche

1. Verfahren zum zentralen Synchronisieren der Ausführung von Befehlen durch eine Vielzahl von Peripheriegeräten (10) eines drahtlosen Netzwerks, das ein Zentralgerät (5) enthält, wobei die Peripheriegeräte (10) und das Zentralgerät (5) jeweils einen entsprechenden Taktgeber (31, 23) umfassen, wobei das Verfahren das Ausführen einer Sequenz von Betriebszyklen umfasst, wobei jeder Betriebszyklus Folgendes umfasst:
- durch das Zentralgerät (5), Ausführen einer Anzahl von Referenzbefehlen (INS1), Bestimmen von Zeitpunkten (T_{MD}(k)) relativ zu den Ausführungen der Referenzbefehle und bezogen auf den Taktgeber des Zentralgeräts (5), Bestimmen eines Referenzzeitstempels (T_{MD}(k)) als Funktion der bestimmten Zeitpunkte (T_{MD}(k)), und Veranlassen der Ausführung eines ersten und eines zweiten lokalen Befehls (INS2, INS4) durch jedes Peripheriegerät (10);
- Bestimmen eines entsprechenden ersten peripheren Zeitstempels (t_{i,t1}(k)) und eines entsprechenden zweiten peripheren Zeitstempels (t_{i,t2}(k)) durch jedes Peripheriegerät (10), die relativ zu der Ausführung, durch das Peripheriegerät (10), jeweils der ersten und der zweiten lokalen Befehle sind und auf den Taktgeber (31) des Peripheriegeräts (10) bezogen sind;
- durch das Zentralgerät (5), Veranlassen der Ausführung eines zu synchronisierenden Befehls (INS3) durch jedes Peripheriegerät (10), wobei der Schritt des Veranlassens der Ausführung eines zu synchronisierenden Befehls das Senden eines jeweiligen Befehlspakets (Pₖ), das den zu synchronisierenden Befehl enthält, durch das Zentralgerät (5) an jedes Peripheriegerät (10) umfasst, wobei die Befehlspakete jeweils mit einer jeweiligen Sendeverzögerung (τᵢ(k)) in Bezug auf einen Sendereferenzzeitpunkt (tₛ) gesendet werden, so dass die Ausführung des zu synchronisierenden Befehls durch jedes Peripheriegerät (10) als Funktion der jeweiligen Sendeverzögerung verzögert wird, wobei die Sendeverzögerungen relativ zum vorherigen Betriebszyklus sind;
- für jedes Peripheriegerät (10), Bestimmen, alternativ durch das Zentralgerät (5) oder das Peripheriegerät (10), eines entsprechenden Zeitparameters (Iᵢ(k)), der eine Funktion der entsprechenden ersten und zweiten Peripheriezeitstempel (t_{i,t1}(k), t_{i,t2} (k)) ist;
wobei jeder Betriebszyklus ferner durch das Zentralgerät (5) Folgendes umfasst:
- Ausführen, ausgehend von den bestimmten Zeitparametern (Iᵢ(k)), eines maschinellen Lernalgorithmus, der trainiert wird, um für jedes Peripheriegerät (10) eine entsprechende Schätzung (t*_{MD,i}(k)) des Referenzzeitstempels (T_{MD}(k)) zu bestimmen; und
- Berechnen der Sendeverzögerungen (τᵢ(k+1)) relativ zum Betriebszyklus als Funktion der Schätzungen (t*_{MD,i}(k)), die durch den maschinellen Lernalgorithmus bestimmt wurden, und des Referenzzeitstempels (T_{MD}(k)) .

2. Verfahren nach Anspruch 1, wobei der Schritt des Veranlassens der Ausführung eines ersten und eines zweiten lokalen Befehls (INS2, INS4) durch jedes Peripheriegerät (10) umfasst:
- Senden eines jeweiligen ersten Zeitpakets (T1), das den ersten lokalen Befehl enthält, durch das Zentralgerät (5) an jedes Peripheriegerät (10); und
- Senden eines jeweiligen zweiten Zeitpakets (T2), das den zweiten lokalen Befehl enthält, an jedes Peripheriegerät (10) durch das Zentralgerät (5);
und wobei der Schritt des Bestimmens eines entsprechenden ersten peripheren Zeitstempels (t_{i,t1}(k)) durch jedes Peripheriegerät (10) als Reaktion auf den Empfang des jeweiligen ersten Zeitpakets (T1) durch das Peripheriegerät (10) ausgeführt wird; und wobei der Schritt des Bestimmens eines entsprechenden zweiten peripheren Zeitstempels (t_{i,t2}(k)) durch jedes Peripheriegerät (10) als Reaktion auf den Empfang des jeweiligen zweiten Zeitpakets (T2) durch das Peripheriegerät (10) ausgeführt wird; und wobei der Schritt des Sendens eines jeweiligen Befehlspakets (Pₖ) an jedes Peripheriegerät (10) durch das Zentralgerät (5) nach dem Schritt des Sendens eines jeweiligen ersten Zeitpakets (T1) an jedes Peripheriegerät (10) und vor dem Schritt des Sendens eines jeweiligen zweiten Zeitpakets (T2) an jedes Peripheriegerät (10) ausgeführt wird.

3. Verfahren nach Anspruch 2, ferner umfassend die Ausführung der folgenden Schritte durch jedes Peripheriegerät (10):
- nach der Bestimmung des jeweiligen ersten peripheren Zeitstempels (t_{i,t1}(k)), Senden eines entsprechenden anfänglichen Bestätigungspakets (AC1), das den ersten peripheren Zeitstempel (t_{i,t1}(k)) enthält, an das Zentralgerät (5);
- nach der Bestimmung des jeweiligen zweiten peripheren Zeitstempels (t_{i,t2}(k)), Senden eines entsprechenden abschließenden Bestätigungspakets (AC3), das den zweiten peripheren Zeitstempel (t_{i,t2}(k)) enthält, an das Zentralgerät (5);
und wobei der Schritt des Sendens eines jeweiligen Befehlspakets (Pₖ) an jedes Peripheriegerät (10) durch das Zentralgerät (5) ausgeführt wird, nachdem das Zentralgerät (5) alle anfänglichen Bestätigungspakete (AC1) empfangen hat.

4. Verfahren nach Anspruch 3, das ferner den Schritt des Sendens eines entsprechenden Zwischenbestätigungspakets (AC2) an das Zentralgerät (5) durch jedes Peripheriegerät (10) nach dem Empfang des jeweiligen Befehlspakets (Pₖ) umfasst; und wobei der Schritt des Sendens eines jeweiligen zweiten Zeitpakets (T2) an jedes Peripheriegerät (10) durch das Zentralgerät (5) ausgeführt wird, nachdem das Zentralgerät (5) alle Zwischenbestätigungspakete (AC2) empfangen hat.

5. Verfahren nach einem der vorhergehenden Ansprüche, wobei der maschinelle Lernalgorithmus (38) durch Ausführen einer Sequenz von Trainingszyklen trainiert wird, wobei jeder Trainingszyklus umfasst:
- durch das Zentralgerät (5), Ausführen einer Anzahl von Trainingsreferenzbefehlen (INS T1), Bestimmen von Trainingszeitpunkten (T'_{MD}(k')) relativ zu den Ausführungen der Trainingsreferenzbefehle und bezogen auf den Taktgeber des Zentralgeräts (5), und Bestimmen eines Trainingsreferenzzeitstempels (T'_{MD}(k')) als Funktion der bestimmten Trainingszeitpunkten (T'_{MD}(k'));
- Senden eines jeweiligen ersten Zeitpakets (T1'), das einen ersten lokalen Trainingsbefehl (INS_T2) enthält, durch das Zentralgerät (5) an jedes Peripheriegerät (10);
- durch jedes Peripheriegerät (10), Ausführen des ersten lokalen Trainingsbefehl und Bestimmen eines entsprechenden ersten peripheren Trainingszeitstempels (t'_{i,t1}(k')), der relativ zu der Ausführung des ersten lokalen Trainingsbefehls durch das Peripheriegerät (10) ist und auf den Taktgeber (31) des Peripheriegeräts (10) bezogen ist, und Senden eines entsprechenden anfänglichen Bestätigungspakets (AC1'), das den ersten Trainingsperipheriezeitstempel (t'_{i,t1}(k')) enthält, an das Zentralgerät (5);
- Senden eines jeweiligen Trainingspakets (P'_{k'}), das einen Trainingsbefehl enthält, durch das Zentralgerät (5) an jedes Peripheriegerät (10), wobei die Trainingspakete (P'_{k'}) gleichzeitig gesendet werden;
- Ausführen des Trainingsbefehls (INS_T3) durch jedes Peripheriegerät (10) nach dem Empfang des jeweiligen Trainingspakets (P'_{k'});
- Senden eines jeweiligen zweiten Zeitpakets (T2'), das den zweiten lokalen Trainingsbefehl enthält, durch das Zentralgerät (5) an jedes Peripheriegerät (10);
- durch jedes Peripheriegerät (10), Ausführen des zweiten lokalen Trainingsbefehls (INS_T4) und Bestimmen eines entsprechenden zweiten peripheren Trainingszeitstempels (t'_{i,t2}(k')), der relativ zu der Ausführung des zweiten lokalen Trainingsbefehls durch das Peripheriegerät (10) ist und auf den Taktgeber (31) des Peripheriegeräts (10) bezogen ist, und Senden eines entsprechenden abschließenden Bestätigungspakets (AC3'), das den zweiten peripheren Trainingszeitstempel (t'_{i,t2}(k')) enthält, an das Zentralgerät (5);
- durch das Zentralgerät (5), Bestimmen eines entsprechenden Trainingszeitparameters (I'ᵢ(k')) für jedes Peripheriegerät (10), der eine Funktion des entsprechenden ersten und zweiten Trainingszeitstempels (t'_{i,t1}(k'), t'_{i,t2}(k')) ist, und Trainieren des maschinellen Lernalgorithmus (38) auf der Grundlage der Trainingszeitparameter (I'ᵢ(k')) und des Trainingsreferenzzeitstempels (T'_{MD}(k')) in einer überwachten Weise.

6. Verfahren nach Anspruch 5, wobei der maschinelle Lernalgorithmus (38) eine Vielzahl von Gewichten umfasst; und wobei jeder Trainingszyklus das Erfassen von Anfangswerten der Gewichte relativ zum Trainingszyklus umfasst; und wobei der Schritt des Trainings des maschinelle Lernalgorithmus (38) das Aktualisieren der Werte der Gewichte als Funktion der Trainingszeitparameter (I'ᵢ(k')) und des Trainingsreferenzzeitstempels (T'_{MD}(k')) umfasst; und wobei die Anfangswerte der Gewichte relativ zu dem Trainingszyklus gleich den aktualisierten Werten der Gewichte relativ zu dem vorherigen Trainingszyklus sind.

7. Verfahren nach einem der vorhergehenden Ansprüche, wobei der maschinelle Lernalgorithmus (38) ein neuronales Netzwerk (38) ist.

8. Verfahren nach einem der vorhergehenden Ansprüche, wobei jedes Peripheriegerät (10) eine jeweilige Erfassungseinheit (28) umfasst, die so konfiguriert ist, dass sie eine physikalische Größe erfasst, die mit der Verwendung des Peripheriegeräts (10) durch einen Benutzer assoziiert ist, und die so konfiguriert ist, dass sie eine Vielzahl von ferngesteuerten Betrieben ausführt, wobei der zu synchronisierende Befehl, wenn er von dem Peripheriegerät (10) ausgeführt wird, die Ausführung einer der ferngesteuerten Betriebe befiehlt.

9. Elektronisches Zentralgerät (5), das so konfiguriert ist, dass es drahtlos mit einer Vielzahl von elektronischen Peripheriegeräten (10) gekoppelt ist, die jeweils einen jeweiligen Taktgeber (31) umfassen, wobei das elektronische Zentralgerät einen jeweiligen Taktgeber (23) umfasst und so konfiguriert ist, dass es eine Vielzahl von Betriebszyklen ausführt, wobei jeder Betriebszyklus Folgendes umfasst:
- Ausführen einer Anzahl von Referenzbefehlen (INS1), Bestimmen von Zeitpunkten (T_{MD}(k)) relativ zu den Ausführungen der Referenzbefehle und bezogen auf den jeweiligen Taktgeber (23), Bestimmen eines Referenzzeitstempels (T_{MD}(k)) als Funktion der bestimmten Zeitpunkte (T_{MD}(k)) und Veranlassen der Ausführung eines ersten und eines zweiten lokalen Befehls (INS2, INS4) durch jedes elektronische Peripheriegerät (10);
- Empfangen eines entsprechenden ersten peripheren Zeitstempels (t_{i,t1}(k)) und eines entsprechenden zweiten peripheren Zeitstempels (t_{i,t2}(k)) durch jedes elektronische Peripheriegerät (10), die relativ zu der Ausführung jeweils der ersten und der zweiten lokalen Befehle durch das elektronische Peripheriegerät (10) sind und auf den Taktgeber (31) des elektronischen Peripheriegeräts (10) bezogen sind;
- Veranlassen der Ausführung eines zu synchronisierenden Befehls (INS3) durch jedes elektronischen Peripheriegerät (10), wobei der Schritt des Veranlassens der Ausführung eines zu synchronisierenden Befehls das Senden eines jeweiligen Befehlspakets (Pₖ), das den zu synchronisierenden Befehl enthält, an jedes elektronischen Peripheriegerät (10) umfasst, wobei die Befehlspakete jeweils mit einer jeweiligen Sendeverzögerung (τᵢ(k)) in Bezug auf einen Sendereferenzzeitpunkt (tₛ) gesendet werden, so dass die Ausführung des zu synchronisierenden Befehls durch jedes Peripheriegerät (10) als Funktion der jeweiligen Sendeverzögerung verzögert wird, wobei die Sendeverzögerungen relativ zum vorherigen Betriebszyklus sind;
- Bestimmen für jedes elektronische Peripheriegerät (10), oder alternativ Empfangen von jedem elektronischen Peripheriegerät (10), eines entsprechenden Zeitparameters (Iᵢ(k)), der eine Funktion des entsprechenden ersten und zweiten peripheren Zeitstempels (t_{i,t1}(k), t_{i,t2} (k)) ist;
- Ausführen, ausgehend von den bestimmten Zeitparametern (Iᵢ(k)), eines maschinellen Lernalgorithmus, der trainiert wird, um für jedes elektronische Peripheriegerät (10) eine entsprechende Schätzung (t*_{MD,i}(k)) des Referenzzeitstempels (T_{MD}(k)) zu bestimmen; und
- Berechnen der Sendeverzögerungen (τᵢ(k+1)) relativ zum Betriebszyklus als Funktion der Schätzungen (t*_{MD,i}(k)), die durch den maschinellen Lernalgorithmus bestimmt wurden, und des Referenzzeitstempels (T_{MD}(k)) .

10. Elektronisches Zentralgerät (5) nach dem vorhergehenden Anspruch, das ferner dazu konfiguriert ist:
- Senden eines jeweiligen ersten Zeitpakets (T1), das den ersten lokalen Befehl enthält, an jedes elektronische Peripheriegerät (10); und
- Senden eines jeweiligen zweiten Zeitpakets (T2), das den zweiten lokalen Befehl enthält, an jedes elektronische Peripheriegerät (10);
wobei das elektronische Zentralgerät (5) ferner so konfiguriert ist, dass es an jedes elektronische Peripheriegerät (10) das jeweilige Befehlspaket (Pₖ) sendet, nachdem es das jeweilige erste Zeitpaket (T1) an jedes Peripheriegerät (10) gesendet hat und bevor es das jeweilige zweite Zeitpaket (T2) an jedes Peripheriegerät (10) sendet.

11. System mit einem elektronischen Zentralgerät (5) nach Anspruch 10 und einer Vielzahl von elektronischen Peripheriegeräten (10),
wobei jedes elektronische Peripheriegerät (10) so konfiguriert ist, dass es den jeweiligen ersten peripheren Zeitstempel (t_{i,t1}(k)) und den jeweiligen zweiten peripheren Zeitstempel (t_{i,t2}(k)) als Reaktion auf den Empfang jeweils des jeweiligen ersten Zeitpakets (T1) und des jeweiligen zweiten Zeitpakets (T2) bestimmt; und wobei jedes elektronische Peripheriegerät (10) ferner so konfiguriert ist, dass es nach der Bestimmung des jeweiligen ersten peripheren Zeitstempels (t_{i,t1}(k)) ein entsprechendes anfängliches Bestätigungspaket (AC1), das den jeweiligen ersten peripheren Zeitstempel (t_{i,t1}(k)) enthält, an das elektronische Zentralgerät (5) sendet; und wobei jedes elektronische Peripheriegerät (10) zudem so konfiguriert ist, dass es nach der Bestimmung des jeweiligen zweiten peripheren Zeitstempels (t_{i,t2}(k)) ein entsprechendes abschließendes Bestätigungspaket (AC3), das den jeweiligen zweiten peripheren Zeitstempel (t_{i,t2}(k)) enthält, an das elektronische Zentralgerät (5) sendet.

12. Computerprogramm, das Befehle umfasst, so dass sie, wenn sie von einem elektronischen Zentralgerät (5) ausgeführt werden, das einen entsprechenden Taktgeber (23) enthält und drahtlos mit einer Vielzahl von Peripheriegeräten (10) gekoppelt werden kann, die entsprechende Taktgeber (31) enthalten, das elektronische Zentralgerät veranlassen, eine Vielzahl von Betriebszyklen auszuführen, wobei jeder Betriebszyklus umfasst:
- Ausführen einer Anzahl von Referenzbefehlen (INS1), Bestimmen von Zeitpunkten (T_{MD}(k)) relativ zu den Ausführungen der Referenzbefehle und bezogen auf den jeweiligen Taktgeber (23), Bestimmen eines Referenzzeitstempels (T_{MD}(k)) als Funktion der bestimmten Zeitpunkte (T_{MD}(k)) und Veranlassen der Ausführung eines ersten und eines zweiten lokalen Befehls (INS2, INS4) durch jedes elektronische Peripheriegerät (10);
- Empfangen eines entsprechenden ersten peripheren Zeitstempels (t_{i,t1}(k)) und eines entsprechenden zweiten peripheren Zeitstempels (t_{i,t2}(k)) durch jedes elektronische Peripheriegerät (10), die relativ zu der Ausführung jeweils der ersten und der zweiten lokalen Befehle durch das elektronische Peripheriegerät (10) sind und auf den Taktgeber (31) des elektronischen Peripheriegeräts (10) bezogen sind;
- Veranlassen der Ausführung eines zu synchronisierenden Befehls (INS3) durch jedes elektronischen Peripheriegerät (10), wobei der Schritt des Veranlassens der Ausführung eines zu synchronisierenden Befehls das Senden eines jeweiligen Befehlspakets (Pₖ), das den zu synchronisierenden Befehl enthält, an jedes elektronischen Peripheriegerät (10) umfasst, wobei die Befehlspakete jeweils mit einer jeweiligen Sendeverzögerung (τᵢ(k)) in Bezug auf einen Sendereferenzzeitpunkt (tₛ) gesendet werden, so dass die Ausführung des zu synchronisierenden Befehls durch jedes Peripheriegerät (10) als Funktion der jeweiligen Sendeverzögerung verzögert wird, wobei die Sendeverzögerungen relativ zum vorherigen Betriebszyklus sind;
- Bestimmen, für jedes elektronische Peripheriegerät (10), oder alternativ Empfangen von jedem elektronischen Peripheriegerät (10), eines entsprechenden Zeitparameters (Iᵢ(k)), der eine Funktion des entsprechenden ersten und zweiten peripheren Zeitstempels (t_{i,t1}(k), t_{i,t2}(k)) ist;
- Ausführen, ausgehend von den bestimmten Zeitparametern (Iᵢ(k)), eines maschinellen Lernalgorithmus, der trainiert wird, um für jedes elektronische Peripheriegerät (10) eine entsprechende Schätzung (t*_{MD,i}(k)) des Referenzzeitstempels (T_{MD}(k)) zu bestimmen; und
- Berechnen der Sendeverzögerungen (τᵢ(k+1)) relativ zum Betriebszyklus als Funktion der Schätzungen (t*_{MD,i}(k)), die durch den maschinellen Lernalgorithmus bestimmt wurden, und des Referenzzeitstempels (T_{MD}(k)).

13. Computermedium, das das Computerprogramm nach Anspruch 12 speichert.

## Revendications

1. Procédé pour la synchronisation centralisée de l'exécution d'instructions par une pluralité de dispositifs périphériques (10) d'un réseau sans fil incluant un dispositif central (5), lesdits dispositifs périphériques (10) et ledit dispositif central (5) comprenant chacun une horloge (31, 23) respective, ledit procédé comprenant l'exécution d'une séquence de cycles d'opérations, chaque cycle d'opérations comprenant :
- par le dispositif central (5), l'exécution d'un certain nombre d'instructions de référence (INS1), la détermination d'instants temporels (T_{MD}(k)) relatifs aux exécutions desdites instructions de référence et faisant référence à l'horloge du dispositif central (5), la détermination d'un horodatage de référence (T_{MD}(k)) en fonction des instants temporels (T_{MD}(k)) déterminés, et le fait d'amener l'exécution, par chaque dispositif périphérique (10), d'une première et d'une seconde instruction locale (INS2, INS4) ;
- la détermination, par chaque dispositif périphérique (10), d'un premier horodatage périphérique (t_{i,t1}(k)) correspondant et d'un second horodatage périphérique (t_{i,t2}(k)) correspondant, qui sont relatifs à l'exécution, par le dispositif périphérique (10), des première et seconde instructions locales, respectivement, et font référence à l'horloge (31) du dispositif périphérique (10) ;
- par le dispositif central (5), le fait d'amener l'exécution, par chaque dispositif périphérique (10), d'une instruction devant être synchronisée (INS3), ladite étape du fait d'amener l'exécution d'une instruction devant être synchronisée comprenant l'envoi, à chaque dispositif périphérique (10), par le dispositif central (5), d'un paquet d'instructions (Pₖ) respectif incluant l'instruction devant être synchronisée, les paquets d'instructions étant chacun envoyés avec un retard d'envoi (τᵢ(k)) respectif par rapport à un instant de référence d'envoi (tₛ), de sorte que l'exécution, par chaque dispositif périphérique (10), de l'instruction devant être synchronisée est retardée en fonction du retard d'envoi respectif, lesdits retards d'envoi étant relatifs au précédent cycle d'opérations ;
- pour chaque périphérique (10), la détermination, alternativement par le dispositif central (5) ou le dispositif périphérique (10), d'un paramètre temporel (Iᵢ(k)) correspondant, qui est une fonction des premier et second horodatages périphériques (t_{i,t1}(k), t_{i,t2}(k)) correspondants ;
chaque cycle d'opérations comprenant en outre, par le dispositif central (5) :
- l'exécution, en commençant par les paramètres temporels (Iᵢ(k)) déterminés, d'un algorithme d'apprentissage automatique entraîné pour déterminer, pour chaque périphérique (10), une estimation (t*_{MD,i}(k)) correspondante de l'horodatage de référence (T_{MD}(k)) ; et
- le calcul desdits retards d'envoi (τᵢ(k+1)) par rapport au cycle d'opérations en fonction des estimations (t*_{MD,i}(k)) déterminées par l'algorithme d'apprentissage automatique et de l'horodatage de référence (T_{MD}(k)).

2. Procédé selon la revendication 1, dans lequel ladite étape du fait d'amener l'exécution, par chaque dispositif périphérique (10), d'une première et d'une seconde instruction locale (INS2, INS4) comprend :
- l'envoi, à chaque dispositif périphérique (10), par le dispositif central (5), d'un premier paquet temporel (T1) respectif incluant la première instruction locale ; et
- l'envoi, à chaque dispositif périphérique (10), par le dispositif central (5), d'un second paquet temporel (T2) respectif incluant la seconde instruction locale ;
et dans lequel l'étape de la détermination, par chaque dispositif périphérique (10), d'un premier horodatage périphérique (t_{i,t1}(k)) correspondant est exécutée en réponse à la réception, par le dispositif périphérique (10), du premier paquet temporel (T1) respectif ; et dans lequel l'étape de la détermination, par chaque dispositif périphérique (10), d'un second horodatage périphérique (t_{i,t2}(k)) correspondant est exécutée en réponse à la réception, par le dispositif périphérique (10), du second paquet temporel (T2) respectif ; et dans lequel l'étape de l'envoi, à chaque dispositif périphérique (10), par le dispositif central (5), d'un paquet d'instructions (Pₖ) respectif est exécutée après ladite étape de l'envoi, à chaque dispositif périphérique (10), d'un premier paquet temporel (T1) respectif et avant ladite étape de l'envoi, à chaque dispositif périphérique (10), d'un second paquet temporel (T2) respectif.

3. Procédé selon la revendication 2, comprenant en outre, par chaque dispositif périphérique (10), l'exécution des étapes de :
- après la détermination du premier horodatage périphérique (t_{i,t1}(k)) respectif, l'envoi, au dispositif central (5), d'un paquet d'accusé de réception initial (AC1) correspondant incluant le premier horodatage périphérique (t_{i,t1}(k)) ;
- après la détermination du second horodatage périphérique (t_{i,t2}(k)) respectif, l'envoi, au dispositif central (5), d'un paquet d'accusé de réception final (AC3) correspondant incluant le second horodatage périphérique (t_{i,t2}(k)) ;
et dans lequel l'étape de l'envoi, à chaque dispositif périphérique (10), par le dispositif central (5), d'un paquet d'instructions (Pₖ) respectif est exécutée après que le dispositif central (5) a reçu tous les paquets d'accusé de réception initiaux (AC1).

4. Procédé selon la revendication 3, comprenant en outre l'étape de l'envoi, par chaque dispositif périphérique (10), d'un paquet d'accusé de réception intermédiaire (AC2) correspondant au dispositif central (5), après la réception du paquet d'instructions (Pₖ) respectif ; et dans lequel l'étape de l'envoi, par le dispositif central (5), d'un second paquet temporel (T2) respectif à chaque dispositif périphérique (10) est exécutée après que le dispositif central (5) a reçu tous les paquets d'accusé de réception intermédiaires (AC2).

5. Procédé selon l'une quelconque des revendications précédentes, dans lequel l'algorithme d'apprentissage automatique (38) est entraîné par l'exécution d'une séquence de cycles d'entraînement, chaque cycle d'entraînement comprenant :
- par le dispositif central (5), l'exécution d'un certain nombre d'instructions de référence d'entraînement (INS_T1), la détermination d'instants temporels d'entraînement (T'_{MD}(k')) relatifs aux exécutions desdites instructions de référence d'entraînement et faisant référence à l'horloge du dispositif central (5), et la détermination d'un horodatage de référence d'entraînement (T'_{MD}(k')) en fonction des instants temporels d'entraînement (T'_{MD}(k')) déterminés ;
- l'envoi, par le dispositif central (5), à chaque dispositif périphérique (10), d'un premier paquet temporel (T1') respectif incluant une première instruction locale d'entraînement (INS_T2) ;
- par chaque dispositif périphérique (10), l'exécution de la première instruction locale d'entraînement et la détermination d'un premier horodatage périphérique d'entraînement (t'_{i,t1}(k')) correspondant, qui est relatif à l'exécution de la première instruction locale d'entraînement par le dispositif périphérique (10) et fait référence à l'horloge (31) du dispositif périphérique (10), et l'envoi, au dispositif central (5), d'un paquet d'accusé de réception initial (AC1') correspondant incluant le premier horodatage périphérique d'entraînement (t'_{i,t1}(k')) ;
- l'envoi, par le dispositif central (5), à chaque dispositif périphérique (10), d'un paquet d'entraînement (P'_{k'}) respectif incluant une instruction d'entraînement, les paquets d'entraînement (P'_{k'}) étant envoyés simultanément ;
- l'exécution, par chaque dispositif périphérique (10), de l'instruction d'entraînement (INS_T3), après la réception du paquet d'entraînement (P'_{k'}) respectif ;
- l'envoi, par le dispositif central (5), à chaque dispositif périphérique (10), d'un second paquet temporel (T2') respectif incluant la seconde instruction locale d'entraînement ;
- par chaque dispositif périphérique (10), l'exécution de la seconde instruction locale d'entraînement (INS_T4) et la détermination d'un second horodatage périphérique d'entraînement (t'_{i,t2}(k')) correspondant, qui est relatif à l'exécution de la seconde instruction locale d'entraînement par le dispositif périphérique (10) et fait référence à l'horloge (31) du dispositif périphérique (10), et l'envoi, au dispositif central (5), d'un paquet d'accusé de réception final (AC3') correspondant incluant le second horodatage périphérique d'entraînement (t'_{i,t2}(k')) ;
- par le dispositif central (5), la détermination, pour chaque dispositif périphérique (10), d'un paramètre temporel d'entraînement (I'ᵢ(k')) correspondant, qui est une fonction des premier et second horodatages d'entraînement (t'_{i,t1}(k'), t'_{i,t2}(k')) correspondants, et l'entraînement de l'algorithme d'apprentissage automatique (38) d'une manière supervisée, sur la base des paramètres temporels d'entraînement (I'ᵢ(k')) et de l'horodatage de référence d'entraînement (T'_{MD}(k')).

6. Procédé selon la revendication 5, dans lequel l'algorithme d'apprentissage automatique (38) comprend une pluralité de pondérations ; et dans lequel chaque cycle d'entraînement comprend l'acquisition de valeurs initiales des pondérations par rapport au cycle d'entraînement ; et dans lequel ladite étape d'entraînement de l'algorithme d'apprentissage automatique (38) comprend la mise à jour des valeurs des pondérations en fonction des paramètres temporels d'entraînement (I'ᵢ(k')) et de l'horodatage de référence d'entraînement (T'_{MD}(k')) ; et dans lequel les valeurs initiales des pondérations relatives au cycle d'entraînement sont égales aux valeurs mises à jour des pondérations relatives au précédent cycle d'entraînement.

7. Procédé selon l'une quelconque des revendications précédentes, dans lequel ledit algorithme d'apprentissage automatique (38) est un réseau de neurones (38).

8. Procédé selon l'une quelconque des revendications précédentes, dans lequel chaque dispositif périphérique (10) comprend une unité de détection (28) respective configurée pour détecter une grandeur physique associée à l'utilisation du dispositif périphérique (10) par un utilisateur et configurée pour exécuter une pluralité d'opérations commandées à distance, ladite instruction devant être synchronisée ordonnant, lors de son exécution par le dispositif périphérique (10), l'exécution de l'une desdites opérations commandées à distance.

9. Dispositif électronique central (5) configuré pour se coupler sans fil à une pluralité de dispositifs électroniques périphériques (10) comprenant chacun une horloge respective (31), le dispositif électronique central comprenant une horloge respective (23) et étant configuré pour exécuter une pluralité de cycles d'opérations, chaque cycle d'opérations comprenant :
- l'exécution d'un certain nombre d'instructions de référence (INS1), la détermination d'instants temporels (T_{MD}(k)) relatifs aux exécutions desdites instructions de référence et faisant référence à l'horloge (23) respective, la détermination d'un horodatage de référence (T_{MD}(k)) en fonction des instants temporels (T_{MD}(k)) déterminés, et le fait d'amener l'exécution, par chaque dispositif électronique périphérique (10), d'une première et d'une seconde instruction locale (INS2, INS4) ;
- la réception, par chaque dispositif électronique périphérique (10), d'un premier horodatage périphérique (t_{i,t1}(k)) correspondant et d'un second horodatage périphérique (t_{i,t2}(k)) correspondant, qui sont relatifs à l'exécution des première et seconde instructions locales, respectivement, par le dispositif électronique périphérique (10) et font référence à l'horloge (31) du dispositif électronique périphérique (10) ;
- le fait d'amener l'exécution, par chaque dispositif électronique périphérique (10), d'une instruction devant être synchronisée (INS3), ladite étape du fait d'amener l'exécution d'une instruction devant être synchronisée comprenant l'envoi, à chaque dispositif électronique périphérique (10), d'un paquet d'instructions (Pₖ) respectif incluant l'instruction devant être synchronisée, les paquets d'instructions étant chacun envoyés avec un retard d'envoi (τᵢ(k)) respectif par rapport à un instant de référence d'envoi (tₛ), de sorte que l'exécution, par chaque dispositif électronique périphérique (10), de l'instruction devant être synchronisée est retardée en fonction du retard d'envoi respectif, lesdits retards d'envoi étant relatifs au précédent cycle d'opérations ;
- la détermination, pour chaque dispositif électronique périphérique (10), ou alternativement la réception, en provenance de chaque dispositif électronique périphérique (10), d'un paramètre temporel (Iᵢ(k)) correspondant, qui est une fonction des premier et second horodatages périphériques (t_{i,t1}(k), t_{i,t2}(k)) correspondants ;
- l'exécution, en commençant par les paramètres temporels (Iᵢ(k)) déterminés, d'un algorithme d'apprentissage automatique entraîné pour déterminer, pour chaque électronique périphérique (10), une estimation (t*_{MD,i}(k)) correspondante de l'horodatage de référence (T_{MD}(k)) ; et
- le calcul desdits retards d'envoi (τᵢ(k+1)) par rapport au cycle d'opérations en fonction des estimations (t*_{MD,i}(k)) déterminées par l'algorithme d'apprentissage automatique et de l'horodatage de référence (T_{MD}(k)).

10. Dispositif électronique central (5) selon la revendication précédente, qui est en outre configuré pour :
- envoyer, à chaque dispositif électronique périphérique (10), un premier paquet temporel (T1) respectif incluant la première instruction locale ; et
- envoyer, à chaque dispositif électronique périphérique (10), un second paquet temporel (T2) respectif incluant la seconde instruction locale ;
le dispositif électronique central (5) étant en outre configuré pour envoyer, à chaque dispositif électronique périphérique (10), le paquet d'instructions (Pₖ) respectif après avoir envoyé, à chaque dispositif périphérique (10), le premier paquet temporel (T1) respectif et avant d'envoyer, à chaque dispositif périphérique (10), le second paquet temporel (T2) respectif.

11. Système comprenant un dispositif électronique central (5) selon la revendication 10 et ladite pluralité de dispositifs électroniques périphériques (10),
dans lequel chaque dispositif électronique périphérique (10) est configuré pour déterminer le premier horodatage périphérique (t_{i,t1}(k)) respectif et le second horodatage périphérique (t_{i,t2}(k)) respectif en réponse à la réception du premier paquet temporel (T1) respectif et du second paquet temporel (T2) respectif, respectivement ; et dans lequel chaque dispositif électronique périphérique (10) est en outre configuré pour envoyer, au dispositif électronique central (5), après la détermination du premier horodatage périphérique (t_{i,t1}(k)) respectif, un paquet d'accusé de réception initial (AC1) correspondant incluant le premier horodatage périphérique (t_{i,t1}(k)) respectif ; et dans lequel chaque dispositif électronique périphérique (10) est en outre configuré pour envoyer, au dispositif électronique central (5), après la détermination du second horodatage périphérique (t_{i,t2}(k)) respectif, un paquet d'accusé de réception final (AC3) correspondant incluant le second horodatage périphérique (t_{i,t2}(k)) respectif.

12. Programme informatique comprenant des instructions de sorte, lors de leur exécution par un dispositif électronique central (5) incluant une horloge (23) respective et apte à être couplé sans fil à une pluralité de dispositifs périphériques (10) incluant des horloges (31) respectives, qu'elles amènent le dispositif électronique central à exécuter une pluralité de cycles d'opérations, chaque cycle d'opérations comprenant :
- l'exécution d'un certain nombre d'instructions de référence (INS1), la détermination d'instants temporels (T_{MD}(k)) relatifs aux exécutions desdites instructions de référence et faisant référence à l'horloge (23) respective, la détermination d'un horodatage de référence (T_{MD}(k)) en fonction des instants temporels (T_{MD}(k)) déterminés, et le fait d'amener l'exécution, par chaque dispositif électronique périphérique (10), d'une première et d'une seconde instruction locale (INS2, INS4) ;
- la réception, par chaque dispositif électronique périphérique (10), d'un premier horodatage périphérique (t_{i,t1}(k)) correspondant et d'un second horodatage périphérique (t_{i,t2}(k)) correspondant, qui sont relatifs à l'exécution des première et seconde instructions locales, respectivement, par le dispositif électronique périphérique (10) et font référence à l'horloge (31) du dispositif électronique périphérique (10) ;
- le fait d'amener l'exécution, par chaque dispositif électronique périphérique (10), d'une instruction devant être synchronisée (INS3), ladite étape du fait d'amener l'exécution d'une instruction devant être synchronisée comprenant l'envoi, à chaque dispositif électronique périphérique (10), d'un paquet d'instructions (Pₖ) respectif incluant l'instruction devant être synchronisée, les paquets d'instructions étant chacun envoyés avec un retard d'envoi (τᵢ(k)) respectif par rapport à un instant de référence d'envoi (tₛ), de sorte que l'exécution, par chaque dispositif électronique périphérique (10), de l'instruction devant être synchronisée est retardée en fonction du retard d'envoi respectif, lesdits retards d'envoi étant relatifs au précédent cycle d'opérations ;
- la détermination, pour chaque dispositif électronique périphérique (10), ou alternativement la réception, en provenance de chaque dispositif électronique périphérique (10), d'un paramètre temporel (Iᵢ(k)) correspondant, qui est une fonction des premier et second horodatages périphériques (t_{i,t1}(k), t_{i,t2}(k)) correspondants ;
- l'exécution, en commençant par les paramètres temporels (Iᵢ(k)) déterminés, d'un algorithme d'apprentissage automatique entraîné pour déterminer, pour chaque électronique périphérique (10), une estimation (t*_{MD,i}(k)) correspondante de l'horodatage de référence (T_{MD}(k)) ; et
- le calcul desdits retards d'envoi (τᵢ(k+1)) par rapport au cycle d'opérations en fonction des estimations (t*_{MD,i}(k)) déterminées par l'algorithme d'apprentissage automatique et de l'horodatage de référence (T_{MD}(k)).

13. Support informatique qui stocke le programme informatique selon la revendication 12.
